(19) Europäisches Patentamt
European Patent Office
Office européen des brevets

(11) **EP 4 624 098 A2**

(12) **EUROPÄISCHE PATENTANMELDUNG**

(43) Veröffentlichungstag:
**01.10.2025 Patentblatt 2025/40**

(21) Anmeldenummer: **25190703.6**

(22) Anmeldetag: **03.05.2022**

(51) Internationale Patentklassifikation (IPC):
***B25B 27/10*** *(2006.01)*

(52) Gemeinsame Patentklassifikation (CPC):
**F16L 33/207; B21D 39/048; B25B 27/10; F16L 13/142; F16L 33/20; F16L 33/2073; F16L 33/2076; F16L 37/091**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2021 EP 21172019**

(62) Dokumentnummer(n) der früheren Anmeldung(en) nach Art. 76 EPÜ:
**22727099.8 / 4 334 049**

(71) Anmelder: **Viega Technology GmbH & Co. KG**
**57439 Attendorn (DE)**

(72) Erfinder:
• **Sinoplu, Sudi**
**57439 Attendorn (DE)**
• **Rocksloh, Stefan**
**57439 Attendorn (DE)**
• **Düperthal, Fabian**
**57368 Lennestadt (DE)**
• **Hartmann, Anton**
**57439 Attendorn (DE)**
• **Köster, Paul**
**57462 Olpe (DE)**
• **Dasbach, Philipp**
**57234 Wilnsdorf (DE)**
• **Avci, Mesut**
**57439 Attendorn (DE)**
• **Rosenthal, Jörg**
**51580 Reichshof-Eckenhagen (DE)**
• **Müller, Andreas**
**57258 Freudenberg (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

Bemerkungen:
Diese Anmeldung ist am 21-07-2025 als Teilanmeldung zu der unter INID-Code 62 erwähnten Anmeldung eingereicht worden.

(54) **SYSTEM ZUM VERBINDEN VON STARREN ROHREN UND ZUM VERBINDEN VON FLEXIBLEN ROHREN**

(57)  Die Erfindung betrifft ein System zum Verbinden von starren Rohren (4) und zum Verbinden von flexiblen Rohren (6), wobei die Rohre (4, 6) zueinander korrespondierende Außendurchmesser aufweisen, mit einer eine Presskontur (8; 108) aufweisenden Pressbacke (10; 110), mit mindestens einem ersten Fitting (20; 120) zum Pressverbinden mit einem starren Rohr (4), wobei das mindestens eine erste Fitting (20; 120) eine erste Presshülse (21; 121) mit einer ersten Außenkontur (22; 122) aufweist, mit mindestens einem zweiten Fitting (40; 140) zum Pressverbinden mit einem flexiblen Rohr (6), wobei das mindestens eine zweite Fitting (40; 140) eine zweite Presshülse (41; 141) mit einer zweiten Außenkontur (42; 142) aufweist, wobei die Außenkontur (22; 122) der ersten Presshülse (21; 121) und die Außenkontur (42; 142) der zweiten Presshülse (41; 141) jeweils zumindest abschnittsweise an die Presskontur (8; 108) der Pressbacke (10; 110) angepasst sind und durch die Pressbacke (10; 110) verpressbar sind und wobei die Außenkonturen (22; 122; 42; 142) der ersten Presshülse (21; 121) und der zweiten Presshülse (41; 141) zumindest abschnittsweise übereinstimmen. Dieses System löst das technische Problem, den baustellenseitigen Aufwand für das Installieren von Rohrleitungssystemen zu vereinfachen. Die Aufgabe besteht insbesondere darin, geeignete Kombinationen von Fittings für starre und flexible Rohre anzugeben.

Fig.1a

**Beschreibung**

Die Erfindung betrifft ein System zum Verbinden von starren Rohren und zum Verbinden von flexiblen Rohren, wobei die Rohre zueinander korrespondierende Außendurchmesser aufweisen. Die Erfindung betrifft auch eine Mehrzahl von Fittings, die für einen Einsatz in einem solchen System geeignet sind, sowie ein System von Fittings.

Der für die vorliegende Erfindung relevante technische Bereich ist die baustellenseitige Installation von Rohrleitungssystemen, bei der allgemein für das Leiten und Führen eines Fluids, also einer Flüssigkeit oder eines Gases ein aus Rohrabschnitten und Fittings bestehendes Rohrleitungssystem installiert wird. Als Fitting wird grundsätzlich ein Verbindungsstück für eine Rohrleitung verstanden, und ein Fitting wird am häufigsten zur Verbindung von zwei oder mehreren Rohrabschnitten eingesetzt. Das Fitting weist dementsprechend bevorzugt zwei oder mehr Pressabschnitte beispielsweise in Form von Presshülsen auf. Zu den häufigsten Fittings zählen gerade Verbindungen, Richtungswechsel in Form von Rohrbögen, Reduzierstücke, Abzweige wie T-Stücke oder Kreuzungen. Unter einem Fitting ist aber auch ein Rohranschluss einer Armatur oder einer sonstigen Komponente zu verstehen. Beispielsweise weisen Thermometer oder Manometer als Armaturen nur einen Anschluss für einen Rohrabschnitt auf. Somit weist das Fitting einer Armatur nur einen Pressabschnitt auf, um ein Rohrabschnitt an der Armatur anzuschließen.

Für das Verbinden der Rohrabschnitte mit den Fittings und sonstigen Komponenten werden Pressverbindungen genutzt, bei denen ein Pressabschnitt eines Fittings bei eingestecktem Rohrabschnitt mittels einer Pressbacke radial nach innen so umgeformt wird, dass eine dauerhafte und dichte, gegebenenfalls sogar unlösbare Verbindung hergestellt wird. Die Fittings können dabei mit einem Dichtungsmittel, beispielsweise mit einem O-Ring, versehen sein, das die Dichtheit der Verbindung gewährleistet, oder auch mittels eines direkten Kontakts der Materialien des Rohrabschnitts und des Fittings, beispielweise metallisch dichtend ausgebildet sein.

Als Presstechnik für ein radiales Umformen des Pressabschnittes kommen vorwiegend radial wirkende Presssysteme als auch Presssysteme in Frage, die ein radial-axiales Verpressen nutzen, wobei während des Pressvorgangs ein Teil des Fittings axial verschoben wird, um dadurch ein radiales Umformen zu bewirken.

Die zuvor allgemein beschriebenen Rohrleitungssysteme dienen insbesondere einem Transport von Trink- oder Heizungswasser, von Gas zum Betrieb einer Heizungsanlage oder von Industriegasen. Grundsätzlich kann jedes fluide Medium in den Rohrleitungen transportiert werden.

Unter einem starren Rohr wird im Rahmen dieser Anmeldung ein Rohr verstanden, das mit einem außen abdichtenden Fitting verbunden wird. Die Festigkeit des Materials des Rohrs reicht dabei aus, dass die durch das Fitting von außen einwirkenden Kräfte zwar eine dauerhafte Abdichtung ermöglichen, jedoch das starre Rohr nicht oder nur so wenig verformen, so dass die Verbindung stabil und dicht bleibt.

Darüber hinaus sind auch Anwendungen wie z.B. für PE-Rohre oder dünnwandige Kupferrohre bekannt, die außen abgedichtet werden und zusätzlich eine innere Stützhülse eingesetzt wird. Denn die Festigkeit des Materials reicht nicht vollständig für eine Außenabdichtung ohne die Gefahr einer Verformung des Rohres aus. Die eingeschobene Stützhülse hat nur eine Stützfunktion und keine Dichtfunktion. Derartige Rohre werden im Rahmen dieser Anmeldung auch als starre Rohre verstanden, da sie mit einem außen abdichtenden Fitting verbunden werden können.

Unter einem flexiblen Rohr im Rahmen dieser Anmeldung ein Rohr verstanden, das mit einem innen abdichtenden Fitting mit einem in das Rohr einzuschiebenden Stützkörper verbunden wird. Die geringe Festigkeit des Materials des Rohrs erfordert es, dass die durch das Fitting von außen und innen einwirkenden Kräfte ohne zu starke Verformung eine dauerhafte Abdichtung ermöglichen, Dabei wird das flexible Rohr von innen und außen mit einer Kraft beaufschlagt, so dass die Verbindung stabil und dicht bleibt.

Als Materialien für starre Rohre werden einerseits feste Werkstoffe, insbesondere metallische Werkstoffe eingesetzt. Als feste Werkstoffe kommen auch feste Kunststoffe in Frage. Starre Rohre werden bevorzugt bei einer Installation mit größeren geraden Abschnitten entlang von Wänden oder Decken oder innerhalb von Wand- oder Deckenkonstruktionen eingesetzt.

Andererseits werden flexible Rohre in den Installationen eingesetzt, insbesondere Kunststoffrohre, sogenannte Vollkunststoffrohre, oder Rohre aus Verbundmaterialien, sogenannte Mehrschichtverbundrohre, bestehend aus einer oder mehreren Lagen aus Kunststoff und einer oder mehreren dünnen Lagen aus Metall. Flexible Rohre werden insbesondere für die Installation von Vorwandtechnik wie nachträglich einzubauende Sanitärinstallationen eingesetzt, bei denen auf engem Raum die flexiblen Rohre oftmals vor Ort zurecht gebogen werden und in gekrümmtem Zustand verbaut werden.

Weiterhin liegen die starren Rohre und die flexiblen Rohre in diversen Außendurchmessern vor. Bei Metallrohren werden insbesondere Außendurchmesser im Bereich von 6 mm - 108 mm und größer bis 6 Zoll eingesetzt. Bei Kunststoffrohren liegen die Außendurchmesser üblicher Weise im Bereich von 6 mm - 63 mm, wobei auch hier deutlich größere Außendurchmesser zum Einsatz kommen.

Beim Verlegen eines Rohrleitungssystems, bei denen sowohl starre Rohre und flexible Rohre zum Einsatz kommen, werden zueinander passende Rohrabmessungen für Innen- und Außendurchmesser ausgewählt. Die exakten Werte passen dann paarweise gegebenenfalls nur zufällig überein, passende Abmessungen werden also mit möglichst guter Übereinstimmung ausgewählt. In Kombination mit den spezifischen Fittings für starre Rohre und flexible Rohre existieren somit in der Regel spezifische Fittinggeometrien und Pressbackengeometrien für jedes System bzw. Abmessung.

Daher müssen auf einer Baustelle für verschiedene Rohrleitungen und Fittings verschiedene Pressbacken bereitgehalten werden. Somit ist insbesondere der baustellenseitige Aufwand groß, da eine Mehrzahl von Pressbacken und ggf. sogar verschiedene Presswerkzeuge vorgehalten werden müssen. Hierdurch entsteht eine sehr große Komplexität in der Produktvielfalt und der dazu gehörigen Produktion, Lagerung und Logistik. Für den Kunden, insbesondere den Handwerker, wird diese Komplexität an Rohren, Fittings und Pressbacken noch verstärkt, da zahlreiche Systeme unterschiedlicher Hersteller am Markt verfügbar sind.

Daher liegt der vorliegenden Erfindung das technische Problem zugrunde, den baustellenseitigen Aufwand für das Installieren von Rohrleitungssystemen zu vereinfachen. Das technische Problem besteht insbesondere darin, geeignete Kombinationen von Fittings für starre und flexible Rohre und von dazu passenden Presswerkzeugen anzugeben. Ein weiteres technisches Problem besteht darin, Fittings für die Benutzung in den vorgenannten Systemen anzugeben, insbesondere in Bezug auf den Herstellungsaufwand zu verbessern.

Das zuvor aufgeführte technische Problem wird erfindungsgemäß durch ein System zum Verbinden von starren Rohren und zum Verbinden von flexiblen Rohren gelöst, bei dem die Rohre zueinander korrespondierende Außendurchmesser aufweisen, mit einer eine Presskontur aufweisenden Pressbacke, mit mindestens einem ersten Fitting zum Pressverbinden mit einem starren Rohr, wobei das mindestens eine erste Fitting als ein außen abdichtendes Fitting ausgebildet ist und ein zu verbindendes starres Rohr von außen abdichtet und wobei das mindestens eine erste Fitting eine erste Presshülse mit einer ersten Außenkontur aufweist, mit mindestens einem zweiten Fitting zum Pressverbinden mit einem flexiblen Rohr, wobei das mindestens eine zweite Fitting als ein innen abdichtendes Fitting ausgebildet ist und ein zu verbindendes flexibles Rohr von innen abdichtet und wobei das mindestens eine zweite Fitting eine zweite Presshülse mit einer zweiten Außenkontur aufweist, und wobei die Außenkontur der ersten Presshülse und die Außenkontur der zweiten Presshülse jeweils zumindest abschnittsweise an die Presskontur der Pressbacke angepasst sind und durch die Pressbacke verpressbar sind.

Erfindungsgemäß ist erkannt worden, dass der baustellenseitige Aufwand verringert wird, wenn Fittings für starre Rohre und Fittings für flexible Rohre jeweils eine Presshülse aufweisen, deren Außenkonturen zumindest soweit übereinstimmen, vorzugsweise sogar gleich sind, um mit dem gleichen Presswerkzeug und mit der gleichen damit verbundenen Pressbacke mit entsprechender Presskontur verpresst werden zu können. Somit können Leitungssysteme mit starren Rohren und Leitungssysteme mit flexiblen Rohren mit demselben Presswerkzeug und mit derselben Pressbacke installiert werden. Daher müssen weniger Werkzeuge und Pressbacken auf der Baustelle bereitgehalten werden und der Zeitaufwand für das Rüsten der Werkzeuge wird verringert. Weniger Backenwechsel bzw. eine geringere Werkzeugkomplexität auf der Baustelle führen zu einem einfacheren Werkzeugmanagement.

Als Pressbacke wird ein Teil des gesamten Presswerkzeugsystems verstanden. In der häufigsten Anwendung weist die Pressbacke zwei Pressbackenhälften auf, die an einem Presswerkzeug befestigt sind, die eine mit einem Kolben wirkverbundene Einlaufkontur aufweisen und die durch einen motorisch linear angetriebenen Kolben von einer offenen Position in eine geschlossene Position drehbewegt werden. Durch diese Drehbewegung erfolgt das Verpressen eines in der Pressbacke angeordneten Fittings.

Die Pressbacke kann auch aus zwei Pressbackenhälften bestehen, die über ein Gelenk miteinander verbunden sind und am offenen Ende Kopplungsmittel aufweisen. In die beiden Kopplungsmittel der Pressbacke greift eine Presszange ein, die wiederum Teil eines Presswerkzeugs und über eine Einlaufkontur mit einem Kolben wirkverbunden ist. Durch einen linearen Vorschub des Kolbens des Presswerkzeugs werden die Presszange am vorderen Ende und durch den Eingriff mit den Kopplungsmitteln auch die Pressbacke zusammendrückt. Neben einer zweiteiligen Pressbacke sind auch mehrteilige Pressbacken als Pressschlingen bekannt.

Als Materialien für starre Rohre kommen insbesondere Metalle beispielsweise Edelstähle wie ferritische Stähle wie 1.4521, austenitische Stähle wie 1.4404, Duplex-Stähle wie 1.4462, Rotguss, SiBr, Kupfer, aber auch feste Kunststoffe wie beispielsweise vernetztes Polyethylen (PE-X), Polyethylen erhöhter Temperaturbeständigkeit (PE-RT), Polyvenylchlorid (PVC) sowie Polypropylen (PP) bei entsprechenden Wandstärken zum Einsatz. Des Weiteren können Mehrschichtverbundrohre starr ausgeführt sein, beispielsweise über eine dickere Aluminium-Lage, ebenso können faserverstärkte Rohre eingesetzt werden. Flexible Rohre können aus den gleichen Kunststoffen oder aus Verbund aus Kunststoff und Metallschichten bestehen, jedoch mit einer geringeren Wandstärke ausgebildet sein, so dass die Flexibilität durch die geometrische Ausgestaltung gewährleistet wird.

Starre Rohre und flexible Rohre unterscheiden sich unabhängig von Materialeigenschaft und Dimensionierung des Rohres dadurch, dass ein starres Rohr durch ein außen abdichtendes Fitting verbunden werden kann, während ein flexibles Rohr nur durch ein innen abdichtendes Fitting verbunden werden kann. Wegen der starren Eigenschaft ist die Formstabilität des starren Rohres ausreichend groß, um beim radialen Verpressen die auftretenden Kräfte aufzunehmen und die abdichtende und haltende bzw. fixierende Funktion zusammen mit dem verpressten Fitting zu gewährleisten. Flexible Rohre werden dagegen durch eine Stützhülse von innen gestützt und auf die Stützhülse bei Verpressen des Fittings aufgeformt. Fittings für starre Rohre sind daher außen abdichtende Fittings und Fittings für flexible Rohre sind innen abdichtende Fittings.

Da starre Rohre oft aus einem Material mit einer höheren Festigkeit bestehen, weisen sie in der Regel eine dünnere Wandstärke als flexible Rohre aus einem Material mit einer geringeren Festigkeit auf. Daher werden die Fittings des beschriebenen Systems bevorzugt jeweils für Paare von möglichst gleichen Außendurchmessern der starren Rohre und der flexiblen Rohre eingesetzt, wobei die exakten Außenabmessungen voneinander abweichen können. Die Innenabmessungen können dabei stärker voneinander als die Außenabmessungen abweichen. So gibt es beispielsweise aus einem bestehenden System von Metall- und Kunststoffrohren starre Rohre mit einem Außendurchmesser von 16 mm und flexible Rohre mit einem Außendurchmesser von 15 mm.

Dieses führt dazu, dass die Außendurchmesser der starren Rohre und der flexiblen Rohre gleich oder ähnlich groß sind. Werden die starren Rohre und die flexiblen Rohre in einem gemeinsamen Leitungssystem installiert, so ergeben sich daher nur geringe Strömungsverluste aufgrund der ebenfalls nur geringfügig unterschiedlichen Innenquerschnitte. Somit wird der Ansatz verfolgt, immer ein Paar von benachbarten Außendurchmessern in einem System mit einer Pressbacke mit einer Presskontur zu vereinen, beispielsweise die Paare von Rohraußendurchmessern 16mm/15mm oder 54mm/50mm.

Wie bereits in der Einleitung erläutert, ist ein Fitting jeweils an einer Seite eines Verbinders oder einer Armatur angeordnet. Je nach Funktion des Verbinders oder der Armatur ist somit in der Regel ein Fitting für eine Armatur oder sind bis zu vier Fittings für ein Kreuzungsstück vorgesehen.

Die beschriebenen Fittings und deren Komponenten bestehen bevorzugt aus einem Metall, um eine Verformbarkeit bei ausreichender Härte und Formstabilität nach dem Umformen zu gewährleisten. Als Metalle kommen die für die starren Rohre bereits genannten Metalle in Frage, beispielsweise Edelstähle wie ferritische Stähle wie 1.4521, austenitische Stähle wie 1.4404, Duplex-Stähle wie 1.4462, Rotguss, SiBr, Kupfer.

Die beschriebenen Fittings und deren Komponenten können jedoch auch aus einem nicht-metallischen Werkstoff bzw. Kunststoff bestehen, wenn der nicht-metallische Werkstoff ausreichende Eigenschaften für ein Verpressen und dauerhaftes Verbinden mit Rohren ermöglicht. Als Werkstoffe kommen hier beispielsweise die folgenden Stoffe in Frage: vernetztes Polyethylen (PE-X), Silan-vernetztes Polyethylen (PE-Xb) oder physikalisch vernetztes Polyethylen (PE-Xc), Polyethylen erhöhter Temperaturbeständigkeit (PE-RT), Polyvenylchlorid (PVC), Polypropylen (PP) bei entsprechenden Wandstärken, Polyphenylsulfon (PPSU), Polyetheretherketon (PEEK) oder Polyaryletherketon (PAEK). aliphatisches biobasiertes Polyamid (PA410, PA12, PA12-GF30) oder Polypropylen-Random-Copolymer mit modifizierter Kristallstruktur und erhöhter Temperaturbeständigkeit (PP-RCT).

Bei dem erfindungsgemäßen System sind in bevorzugter Weise die Außenkonturen der ersten Presshülse und der zweiten Presshülse jeweils zumindest abschnittsweise an die Presskontur der Pressbacke angepasst. Dabei bedeutet die Eigenschaft "angepasst sein", dass die Außenkontur der jeweiligen Presshülse an der Presskontur bevorzugt zumindest abschnittsweise flächig aneinander anliegen. An den abschnittsweisen Anlageflächen werden beim Verpressen durch die Pressbacke die vorzugsweise radial nach innen gerichteten Presskräfte auf die Presshülse übertragen. Dadurch wird die Presshülse so umgeformt, dass die Haltewirkung und Dichtwirkung gegenüber dem zu verbindenden Rohr dauerhaft hergestellt wird.

Die Presshülsen können grundsätzlich verschiedene Geometrien aufweisen, solange sie Abschnitte in der Außenkontur aufweisen, die beim Verpressen des Fittings mit der Pressbacke wirksam werden. In bevorzugter Weise bilden die Presshülsen eine zum aufzunehmenden Rohr nach innen hin gerichtete Kammer aus und jeweils mindestens ein Klemmelement, Dichtelement und/oder Kraftübertragungselement ist in der Kammer aufgenommen. Durch die Ausbildung der Kammern können die genannten Elemente zum Herstellen einer auszugsicheren und dichten Verbindung zwischen dem starren oder flexiblen Rohr und dem Fitting vorinstalliert werden. Die Kammer kann dabei zu drei Seiten durch die Presshülse umschlossen werden, die Kammer kann aber auch zum distalen Ende der Presshülse zumindest teilweise offen sein.

In vorteilhafter Weise können die Kammer der ersten Presshülse und die Kammer der zweiten Presshülse unterschiedliche Klemmelemente, Dichtelemente und/oder Kraftübertragungselemente aufnehmen. Somit können bei gleicher Pressgeometrie der Pressbacke und der ersten und zweiten Presshülse unterschiedlich angepasste zu verpressende Elemente für das Abdichten sowie Halten und Fixieren des starren Rohres bzw. des flexiblen Rohres innerhalb des ersten und des zweiten Fittings eingesetzt werden. Die Flexibilität der Ausgestaltung der Fittings und der darin enthaltenen Elemente gewährleistet eine gute Anpassung der Fittings an starre und flexible Rohre gleichermaßen, während die gleiche Presskontur zu Anwendung kommen kann. Innerhalb des beschriebenen Systems wird dadurch eine optimale Verbindungstechnik für starre und flexible Rohre gleichermaßen erreicht.

Wenn - wie beschrieben - die Außenkonturen der ersten Presshülse und der zweiten Presshülse zumindest abschnittsweise übereinstimmen, werden gleiche Abschnitte der Presshülsen für beide Rohrarten gleichermaßen verpresst. Die Presshülsen werden also in den übereinstimmenden Abschnitten in gleicher Weise beim Schließen der Pressbacke umgeformt. In weiter bevorzugter Weise weisen die Presshülsen für die starren Rohre und die Presshülsen für die flexiblen Rohre übereinstimmende Außenkonturen auf und werden daher, gegebenenfalls mit unterschiedlichen Presskräften, durch die gleiche Pressbacke umgeformt.

Des Weiteren kann vorgesehen sein, dass die erste Presshülse einen ersten zusätzlichen Pressabschnitt aufweist, dass die zweite Presshülse einen zweiten zusätzlichen Pressabschnitt aufweist, wobei der erste zusätzliche Pressabschnitt und der zweite zusätzliche Pressabschnitt voneinander abweichende Außenkonturen aufweisen und jeweils abschnittsweise durch die Pressbacke umformbar sind. Somit können verschiedene Funktionalitäten in die Fittings für starre Rohre und die Fittings für flexible Rohre eingeformt werden. Gleichwohl werden beide Fittings mit der gleichen Pressbacke mit der gleichen Presskontur verpresst.

Ein grundsätzlicher Aufbau der Fittings besteht darin, dass ein Grundkörper vorgesehen ist und dass die Presshülsen integral mit dem Grundkörper ausgebildet sind oder stoff- oder kraftschlüssig mit dem Grundkörper verbunden sind. Bei Fittings für flexible Rohre ist zusätzlich eine Stützhülse vorgesehen, um ein eingeschobenes Rohr von innen zu stützen, abzudichten und um Presskräfte aufzunehmen.

Im Folgenden werden Ausführungsformen für Fittings für starre Rohre und für Fittings für flexible Rohre beschrieben. Zum einen stellen diese Ausführungsformen bevorzugte Ausführungsformen des beschriebenen Systems dar. Zum anderen stellen die Ausführungsformen auch jeweils für sich oder in Kombination unabhängige Lösungen der oben genannten technischen Probleme dar.

Im Folgenden werden Abmessungen und Verhältnisse der Abmessungen der Fittings berechnet und miteinander verglichen. Die Berechnungen charakterisieren die Fittings des beschriebenen Systems in bevorzugter Weise.

Bei einer bevorzugten Ausführungsform des Systems ist das Verhältnis des Volumens V(starr) der Kammer der Presshülse des ersten Fittings zu dem Volumen V(flex) der Kammer der Presshülse des zweiten Fittings gegeben durch

$$\delta = \frac{V(starr)}{V(flex)},$$

wobei das Volumen V(starr) gegeben ist durch

$$V(starr) = \frac{\pi \cdot LK(starr)}{4} \cdot (DK(starr)^2 - DR(starr)^2),$$

mit LK(starr) Länge der der Kammer,
mit DK(starr) dem Innendurchmesser der Kammer und
mit DR(starr) dem Außendurchmesser des aufzunehmenden starren Rohres,
wobei das Volumen V(flex) gegeben ist durch

$$V(flex) = \frac{\pi \cdot LK(flex)}{4} \cdot (DK(flex)^2 - DR(flex)^2),$$

mit LK(flex) der Länge der Kammer,
mit DK(flex) dem Innendurchmesser der Kammer und
mit DR(flex) dem Außendurchmesser des aufzunehmenden flexiblen Rohres,
dass das Verhältnis gegeben ist durch

$$\delta = \frac{V(starr)}{V(flex)} = \frac{LK(starr)}{LK(flex)} \cdot \frac{(DK(starr)^2 - DR(starr)^2)}{(DK(flex)^2 - DR(flex)^2)},$$

und
wobei $\delta$ Werte aus einem Wertebereich [0,50; 3,00], bevorzugt [0,50; 1,50], besonders bevorzugt [0,75; 1,25], annimmt.

Die Länge der Kammer, auch Kammerlänge genannt, wird dabei bevorzugt durch die Länge des die Kammer bildenden Abschnitts mit gleichem Durchmesser, also durch die Länge des zylindrischen Abschnitts bestimmt, der die Kammer bildet. Abgerundete Bereiche zu einer Seite oder beiden Seiten des zylindrischen Abschnitts werden nicht bei der Bestimmung der Kammerlänge mit berücksichtigt.

Das Verhältnis $\delta$ der beschriebenen Ausführungsform gibt somit das Verhältnis des Volumens der um ein eingestecktes Rohr umlaufenden Kammer der Presshülse eines Fittings zum Verpressen eines starren Rohres und des Volumens der um ein eingestecktes Rohr umlaufenden Kammer der Presshülse eines Fittings zum Verpressen eines flexiblen Rohres an. Durch ähnliche Kammervolumina und somit durch ein Verhältnis $\delta$ möglichst nahe am Wert 1 wird das Verpressen von starren und flexiblen Rohren mit einer gleichen Presskontur erleichtert.

Bei wesentlich ungleichen Kammervolumina kann dagegen ein Verpressen von starren und flexiblen Rohren mit einer Presskontur nicht vollständig gewährleistet werden.

Beispielsweise kann bei einem Verhältnis der Kammervolumina $\delta<0,5$, bei dem das Kammervolumen der Presshülse des Fittings für flexible Rohre also mindestens doppelt so groß ist wie das Kammervolumen der Presshülse des Fittings für starre Rohre, zum einen die Kammerlänge der Presshülse des Fittings für starre Rohre zu kurz für die Aufnahme von in der Kammer vorgesehenen Elementen gewählt sein. Zum anderen kann für ein solches Verhältnis die Kammer der Presshülse des Fittings für starre Rohre eine zu geringe Höhe und damit einen zu geringen Verpressungsgrad aufweisen. Es ist auch möglich, dass für ein Verhältnis $\delta<0,5$ die Kammer der Presshülse des Fittings für flexible Rohre eine übermäßig große Höhe und damit einen zu hohen Verpressungsgrad erfordert.

Bei einem Verhältnis der Kammervolumina $\delta>1, 5$, insbesondere $\delta>3,0$, bei dem das Kammervolumen der Presshülse des Fittings für starre Rohre also um einen Faktor von wenigstens 1,5, insbesondere wenigstens 3,0 größer ist als das Kammervolumen der Presshülse des Fittings für flexible Rohre, kann dagegen zum einen die Kammerlänge der Presshülse der Presshülse des Fittings für flexible Rohre zu kurz für die Aufnahme von in der Kammer vorgesehenen Elementen, wie etwa einem Kraftübertragungsring, gewählt sein. Zum anderen kann für ein solches Verhältnis die Kammer der Presshülse des Fittings für flexible Rohre eine zu geringe Höhe und damit einen zu geringen Verpressungsgrad aufweisen. Es ist auch möglich, dass für ein Verhältnis $\delta>1, 5$, insbesondere $\delta>3,0$ die Kammer der Presshülse des Fittings für starre Rohre eine übermäßig große Höhe und damit einen zu hohen Verpressungsgrad aufweist.

Werden dagegen, wie in der bevorzugten Ausführungsform des Systems angegeben, möglichst ähnliche Kammervolumina gewählt, dann beträgt das Verhältnis $\delta=1$. Somit können sowohl die Kammerhöhe als auch die Kammerlänge der Presshülsen der Fittings für starre und flexible Rohre so gewählt sein, dass ein gleicher Verpressungsgrad mit einer Presskontur für das Verpressen von starren und flexiblen Rohren erreicht wird. Auf diese Weise kann mit einer Presskontur ein abdichtendes Verpressen von starren und flexiblen Rohren sichergestellt werden.

Alternativ kann auch das System mit gezielt unterschiedlichen Kammervolumina gewählt werden, dann ist das Verhältnis der Kammervolumina innerhalb der beschriebenen Grenzen ungleich 0, also $\delta<>1$. Somit können sowohl die Kammerhöhe als auch die Kammerlänge der Presshülsen der Fittings für starre und flexible Rohre so gewählt sein, dass eine optimale Anordnung verschiedener Funktionselemente innerhalb der Kammer des ersten Fittings für starre Rohre und des zweiten Fittings für flexible Rohre durch unterschiedliche Kammervolumina erreicht werden kann. Auf diese Weise kann mit einer Presskontur ein abdichtendes Verpressen von starren und flexiblen Rohren bei gleichzeitiger optimaler Anpassung der Funktionselemente sichergestellt werden.

Bei einer weiteren bevorzugten Ausführungsform des Systems ist das Verhältnis der Differenz des Innendurchmessers DK(starr) der Kammer der Presshülse des ersten Fittings und des Außendurchmessers DR(starr) des aufzunehmenden starren Rohres zu der doppelten Länge LK(starr) der Kammer gegeben durch

$$\varepsilon(starr) = \frac{DK(starr) - DR(starr)}{2 \cdot LK(starr)}$$

und $\varepsilon$(starr) nimmt Werte aus einem Wertebereich [0,10; 0,50], bevorzugt [0,2; 0,4], besonders bevorzugt [0,25; 0,35] an.

Der Parameter $\varepsilon$(starr) der beschriebenen Ausführungsform gibt somit das Verhältnis der Kammerhöhe zu der Kammerlänge der Presshülse eines Fittings zum Verpressen eines starren Rohres an. Es hat sich gezeigt, dass durch ein Verhältnis bei dem der Wert $\varepsilon$(starr) möglichst den Wert 0,3 annimmt oder möglichst wenig von diesem Wert abweicht, also die Kammerhöhe etwa einem Drittel der Kammerlänge entspricht, ein ausreichender Verpressungsgrad für das sichere Verpressen von starren Rohren mittels der Presshülse des Fittings zum Verpressen für starre Rohre erreicht wird.

Bei Werten von $\varepsilon$(starr), die wesentlich von dem Zielwert $\varepsilon$(starr)=0,3 abweichen, hat sich gezeigt, dass sich durch eine wesentlich kürzer oder wesentlich länger gewählte Kammerlänge im Vergleich zur Kammerhöhe verschiedene Nachteile ergeben.

Beispielsweise bei einem Wert $\varepsilon$(starr)<0,1, bei dem die Kammerlänge mehr als dem 10-fachen der Kammerhöhe entspricht, kann zum einen zu große Kammerlängen für den erreichten Einbauraum bedeuten. Zum anderen kann für ein solches $\varepsilon$(starr) bei sinnvoll gewählter Kammerlänge die Kammerhöhe zu gering ausfallen, um in der Kammer ausreichend Platz für die darin aufzunehmenden Elemente bereitzustellen. Es ist auch möglich, dass für $\varepsilon$(starr)<0,1 ein zu hoher Verpressungsgrad erreicht wird.

Beispielsweise bei einem Wert $\varepsilon$(starr)>0,5, bei dem die Kammerlänge weniger als dem 2-fachen der Kammerhöhe entspricht, kann bei sinnvoll gewählter Kammerhöhe die Kammerlänge zu gering ausfallen, um in der Kammer ausreichend Platz für die darin aufzunehmenden Elemente bereitzustellen. Es ist auch möglich, dass für $\varepsilon$(starr)>0,5 ein zu hoher Verpressungsgrad erreicht wird.

Wird dagegen, wie in der bevorzugten Ausführungsform des Systems angegeben, ein $\varepsilon$(starr) möglichst nahe dem Zielwert von $\varepsilon$(starr)=0,3 gewählt, können durch ein solch gewähltes Verhältnis von Kammerlänge zu Kammerhöhe ausreichend Platz für das Aufnehmen von Elementen im Inneren der Kammer sowie ein optimal gewählter Verpressungsgrad für ein sicheres Verpressen von starren Rohren gewährleistet werden.

Bei einer weiteren bevorzugten Ausführungsform des Systems ist das Verhältnis der Differenz des Innendurchmessers DK(flex) der Kammer der Presshülse des zweiten Fittings und des Außendurchmessers DR(flex) des aufzunehmenden flexiblen Rohres zu der doppelten Länge LK(flex) der Kammer gegeben durch

$$\varepsilon(flex) = \frac{DK(flex) - DR(flex)}{2 \cdot LK(flex)}$$

und $\varepsilon$(flex) nimmt Werte aus einem Wertebereich [0,10; 0,70], insbesondere [0,10; 0,50], bevorzugt [0,20; 0,60], insbesondere [0,2; 0,4], besonders bevorzugt [0,25; 0,50], insbesondere [0,25; 0,35] an.

Der Parameter $\varepsilon$(flex) der beschriebenen Ausführungsform gibt somit das Verhältnis der Kammerhöhe zu der Kammerlänge der Presshülse eines Fittings zum Verpressen eines flexiblen Rohres an. Die sich aus der Wahl des Wertes des Parameters $\varepsilon$(flex) ergebenden Vor- und Nachteile entsprechen den zuvor beschriebenen Vor- und Nachteilen des Parameters $\varepsilon$(starr), so dass ein Zielwert von $\varepsilon$(flex)=0,3 auch für die Kammergeometrie der Presshülse eines Fittings zum Verpressen eines flexiblen Rohres mit einem ausreichenden Verpressungsgrad und ausreichend Platz zur Aufnahme von Elementen im Inneren der Kammer angestrebt wird.

Bei einer weiteren bevorzugten Ausführungsform des Systems, bei dem $\varepsilon$(starr) gegeben ist durch

$$\varepsilon(starr) = \frac{DK(starr) - DR(starr)}{2 \cdot LK(starr)},$$

mit dem Innendurchmesser DK(starr) der Kammer der Presshülse des ersten Fittings,
mit dem Außendurchmesser DR(starr) des aufzunehmenden starren Rohres und
mit der Länge LK(starr) der Kammer,
bei dem $\varepsilon$(flex) gegeben ist durch

$$\varepsilon(flex) = \frac{DK(flex) - DR(flex)}{2 \cdot LK(flex)},$$

mit dem Innendurchmesser DK(flex) der Kammer der Presshülse des zweiten Fittings,
mit dem Außendurchmesser DR(flex) des aufzunehmenden flexiblen Rohres und
mit der Länge LK(flex) der Kammer,
ist das Verhältnis $\alpha$ gegeben durch

$$\alpha = \frac{\varepsilon(starr)}{\varepsilon(flex)} = \frac{LK(flex)}{LK(starr)} \cdot \frac{(DK(starr) - DR(starr))}{(DK(flex) - DR(flex))}$$

und $\alpha$ nimmt Werte aus einem Wertebereich [0,50; 3,00], bevorzugt [0,50; 1,50], besonders bevorzugt [0,75; 1,25], an.

Das Verhältnis $\alpha$ der beschriebenen Ausführungsform gibt somit das Verhältnis des Verhältnisses aus Kammerhöhe und -länge der Presshülse eines Fittings zum Verpressen von starren Rohren und das Verhältnis aus Kammerhöhe und -länge der Presshülse eines Fittings zum Verpressen von flexiblen Rohren an. Durch ähnliche Verhältnisse aus Kammerhöhe und -länge der Presshülsen und somit ein Verhältnis $\delta$ möglichst nahe am Wert 1 wird das Verpressen von starren und flexiblen Rohren mit einer gleichen Presskontur verbessert.

Die sich aus der Wahl des Wertes des Verhältnisses

$$\alpha = \frac{\varepsilon(starr)}{\varepsilon(flex)}$$

ergebenden Vor- und Nachteile entsprechen den zuvor beschriebenen Vor- und Nachteilen für den Wert des Verhältnisses $\delta$ des Volumens der Kammer der Presshülse eines Fittings zum Verpressen eines starren Rohres und des Volumens der Kammer der Presshülse eines Fittings zum Verpressen eines flexiblen Rohres an, wobei ein Wert $\alpha$<0,5 einem mindestens 2-fach größerem Verhältnis von Kammerhöhe und -länge der Presshülse eines Fittings zum Verbinden eines flexiblen Rohres im Vergleich zum entsprechenden Verhältnis der Presshülse eines Fittings zum Verbinden eines starren Rohres entspricht und wobei ein Wert $\alpha$>1,5 einem mindestens 1,5-fach größerem Verhältnis von Kammerhöhe und -länge der Presshülse eines Fittings zum Verbinden eines starren Rohres im Vergleich zum entsprechenden Verhältnis der Presshülse eines Fittings zum Verbinden eines flexiblen Rohres entspricht.

Bei einer weiteren bevorzugten Ausführungsform des Systems ist der Verpressungsgrad β(starr) beim Pressverbinden des ersten Fittings mit einem starren Rohr gegeben durch

$$\beta(starr) = \frac{DK(starr) + 2s(starr) - DPK(starr)}{DR(starr)},$$

mit dem Innendurchmesser DK(starr) der Kammer der Presshülse des ersten Fittings vor dem Verpressen,
mit der Wanddicke s(starr) der Presshülse im zu verpressenden Bereich des ersten Fittings vor dem Verpressen,
mit dem Außendurchmesser DR(starr) des aufzunehmenden starren Rohrs vor dem Verpressen und
mit dem Innendurchmesser DPK(starr) der Presskontur der Pressbacke im zu verpressenden Bereich des ersten Fittings DR(starr),
wobei β(starr) Werte mit β(starr)<0,15, bevorzugt β(starr)<0,12, besonders bevorzugt β(starr)<0,10 annimmt.

Auf diese Weise wird beim Verpressen eine dichte Verbindung mit hoher Auszugsfestigkeit erreicht und die Faltenbildung des zu verbindenden Rohres und des Fittings kann minimiert werden. Der Verpressungsgrad gibt die Änderung des Kammerdurchmessers der Presshülse beim Verpressen an, wobei die Wandstärke der Presshülse mitberücksichtigt wird, und setzt diese Änderung in ein Verhältnis zu dem Durchmesser des zu verpressenden Rohres. Die Änderung wird dabei durch ein Zusammendrücken der Pressbacke beim Verpressen erreicht, wobei der Innendurchmesser der Pressbacke nach dem Verpressen maßgeblich für den Durchmesser der Kammer der Presshülse im verpressten Zustand ist.

Ein Verpressungsgrad von etwa 0, entsprechend einem Verpressungsgrad von etwa 0 %, bedeutet, dass die Kammer nicht verpresst worden ist und somit keine Änderung des Durchmessers erfahren hat. Bei großen Rohrdurchmessern allerdings kann der durch β(starr) angegebene Verpressungsgrad auch bei einem zufriedenstellend abdichtenden Verpressen leicht Werte im niedrigen Prozentbereich, etwa 1 % entsprechend β(starr)=0,01, annehmen. Wird dagegen ein zu hoher Verpressungsgrad gewählt, beispielsweise ein Verpressungsgrad von 0,15 oder größer 0,15, entsprechend einem Verpressungsgrad größer 15 %, kann dies in einer zu starken Verformung und letztendlich zur Deformation des zu verpressende Fittings und/oder des Rohrs führen.

Bei einer weiteren bevorzugten Ausführungsform des Systems ist der Verpressungsgrad β(flex) beim Pressverbinden des zweiten Fittings mit einem flexiblen Rohr gegeben durch

$$\beta(flex) = \frac{DK(flex) + 2s(flex) - DPK(flex)}{DR(flex)},$$

mit dem Innendurchmesser DK(flex) der Kammer der Presshülse des zweiten Fittings vor dem Verpressen,
mit der Wanddicke s(flex) der Presshülse im zu verpressenden Bereich des zweiten Fittings vor dem Verpressen,
mit dem Außendurchmesser DR(flex) des aufzunehmenden flexiblen Rohrs vor dem Verpressen und
mit dem Innendurchmesser DPK(flex) der Presskontur der Pressbacke im zu verpressenden Bereich des zweiten Fittings nach dem Verpressen,
wobei β(flex) Werte mit β(flex)<0,15, bevorzugt β(flex)<0,12, besonders bevorzugt β(flex)<0,10, annimmt.

Auf diese Weise kann eine dichte Verbindung mit hoher Auszugsfestigkeit erreicht und die Faltenbildung des zu verbindenden Rohres und des Fittings beim Verpressen minimiert werden.

Dagegen bedeutet ein Verpressungsgrad β(flex) von etwa 0, entsprechend einem Verpressungsgrad von etwa 0 %, dass kein abdichtendes Verpressen des Fittings mit dem zu verbindenden Rohr erfolgt ist und der Kammerdurchmesser der Presshülse keine Änderung erfahren hat. Bei großen Rohrdurchmessern allerdings kann der durch β(flex) angegebene Verpressungsgrad auch bei einem zufriedenstellend abdichtenden Verpressen leicht Werte im niedrigen Prozentbereich, etwa 1 % entsprechend β(flex)=0,01, annehmen. Nimmt der Verpressungsgrad β(flex) zu große Werte an, beispielsweise bei einem Verpressungsgrad von 0,15 oder größer, entsprechend einem Verpressungsgrad von 15 % oder größer, kann das zu verpressende Fitting bzw. das zu verpressende Rohr zu stark verformt werden, so dass es zu einer Faltenbildung kommt und die zu hohen Presskräfte zur Deformation des zu verpressenden Fittings und/oder des Rohrs führen.

Bei einer weiteren bevorzugten Ausführungsform des Systems ist der Verpressungsgrad β(starr) beim Pressverbinden des ersten Fittings mit einem starren Rohr gegeben durch

$$\beta(starr) = \frac{DK(starr) + 2s(starr) - DPK(starr)}{DR(starr)},$$

mit dem Innendurchmesser DK(starr) der Kammer der Presshülse des ersten Fittings vor dem Verpressen,

mit der Wanddicke s(starr) der Presshülse im zu verpressenden Bereich des ersten Fittings vor dem Verpressen,

mit dem Außendurchmesser DR(starr) des aufzunehmenden starren Rohrs vor dem Verpressen und

mit dem Innendurchmesser DPK(starr) der Presskontur der Pressbacke im zu verpressenden Bereich des ersten Fittings nach dem Verpressen, und

der Verpressungsgrad β(flex) beim Pressverbinden des zweiten Fittings mit einem flexiblen Rohr ist gegeben durch

$$\beta(flex) = \frac{DK(flex) + 2s(flex) - DPK(flex)}{DR(flex)},$$

mit dem Innendurchmesser DK(flex) der Kammer der Presshülse des zweiten Fittings vor dem Verpressen,

mit der Wanddicke s(flex) der Presshülse im zu verpressenden Bereich des zweiten Fittings vor dem Verpressen,

mit dem Außendurchmesser DR(flex) des aufzunehmenden flexiblen Rohrs vor dem Verpressen und

mit dem Innendurchmesser DPK(flex) der Presskontur der Pressbacke im zu verpressenden Bereich des zweiten Fittings nach dem Verpressen,

so dass das Verhältnis $\tau$ gegeben ist durch

$$\tau = \frac{\beta(starr)}{\beta(flex)} = \frac{DK(starr) + 2s(starr) - DPK(starr)}{DK(flex) + 2s(flex) - DPK(flex)} \frac{DR(flex)}{DR(starr)},$$

wobei $\tau$ Werte aus einem Wertebereich [0,50; 1,50], bevorzugt [0,75; 1,5], besonders bevorzugt [0,80; 1,20] annimmt.

Das Verhältnis $\tau$ gibt somit das Verhältnis des Verpressungsgrads der Pressverbindung eines Fittings für ein starres Rohr zu dem Verpressungsgrad der Pressverbindung eines Fittings für ein flexibles Rohr mit demselben Presswerkzeug, also derselben Pressbacke, an und gibt darüber Aufschluss, ob die Pressverbindungen in etwa gleich stark verpresst werden.

Durch eine geeignete Wahl des Verhältnisses $\tau$ kann somit ein optimaler Verpressungsgrad sowohl für das Verpressen eines Fittings mit einem starren Rohr als auch für das Verpressen eines Fittings mit einem flexiblen Rohr mit demselben Presswerkzeug erreicht werden. Beispielsweise kann bei einem optimalen Verpressen eines Fittings mit einem starren Rohr ebenfalls ein optimales Verpressen eines Fittings mit einem flexiblen Rohr mit demselben Presswerkzeug erreicht werden, so dass ein Kollabieren oder eine zu geringe Verpressung eines Fittings mit einem flexiblen Rohr bei Verpressung mit demselben Presswerkzeug verhindert werden kann, ohne das Presswerkzeug für die Verpressvorgänge wechseln zu müssen. Zugleich kann bei einer optimalen Verpressung eines Fittings mit einem flexiblen Rohr ein Kollabieren oder eine zu geringe Verpressung eines Fittings mit einem starren Rohr bei Verpressung mit demselben Presswerkzeug verhindert werden.

Wird dagegen ein zu geringes oder ein zu großes Verhältnis $\tau$, beispielsweise $\tau$<0,5 oder $\tau$>1,5, gewählt, kann bei einer optimalen Verpressung des Fittings zur Verbindung mit einem starren Rohr das Fitting zur Verbindung mit einem flexiblen Rohr bei Verpressung mit demselben Presswerkzeug entweder zu stark verpresst werden, wodurch es kollabiert, oder zu gering verpresst werden, wodurch keine dichte Verbindung entstehen kann.

Bei einer optimalen Verpressung des Fittings zur Verbindung mit einem flexiblen Rohr kann dagegen bei einem zu gering oder zu groß gewähltem Verhältnis $\tau$, beispielsweise $\tau$<0,5 oder $\tau$>1,5, entweder das Fitting zur Verbindung mit einem starren Rohr zu gering verpresst werden, wodurch die Verbindung undicht wird und eine zu geringe Auszugsfestigkeit aufweist, oder zu stark verpresst werden, so dass es zur Beschädigungen des starren Rohres und/oder der Elemente in der Kammer der Presshülse, beispielsweise des Dichtelements, kommt.

Alternativ kann auch das System mit gezielt unterschiedlichen Verpressungsgraden gewählt werden, dann ist das Verhältnis der Verpressungsgrade innerhalb der beschriebenen Grenzen ungleich 0, also $\tau$ <>1. Somit können die Verpressungsgrade der Presshülsen der Fittings für starre und flexible Rohre so gewählt sein, dass eine optimale Anordnung verschiedener Funktionselemente innerhalb der Kammer des ersten Fittings für starre Rohre und des zweiten Fittings für flexible Rohre durch unterschiedliche Ausgestaltungen der Fittings erreicht werden kann. Auf diese Weise kann mit einer Presskontur ein abdichtendes Verpressen von starren und flexiblen Rohren bei gleichzeitiger optimaler Anpassung der Funktionselemente sichergestellt werden.

Eine Ausführungsform eines Fittings zum Verbinden mit einem starren Rohr für ein zuvor beschriebenes System, das das oben aufgezeigte technische Problem löst, weist einen Aufbau auf mit einem Grundkörper, mit einem in dem Grundkörper umfangseitig ausgebildeten und nach innen vorstehenden Anschlagelement, mit einer mit dem Grundkörper verbundenen und eine Außenkontur bildenden Presshülse, wobei die Presshülse eine nach innen zum aufzunehmenden Rohr hin gerichtete Kammer aufweist, mit einem in der Kammer angeordneten Klemmring, wobei der Klemmring aus einem Kunststoff besteht und eine Mehrzahl von entgegen der Auszugsrichtung des einzuschiebenden Rohres ausgerichteten Klemmelementen aufweist, und mit einem in der Kammer angrenzend an das Anschlagelement angeordneten Dichtelement, wobei die Presshülse zusammen mit dem Klemmring, den Klemmelementen und dem Dichtelement das zu verbindende starre Rohr von außen abdichtet,

Die Presshülse ist vorzugsweise integral und einstückig mit dem Grundkörper ausgebildet. Das Dichtelement liegt im verpressten Zustand spaltfrei an der Presshülse und an dem einzuschiebenden Rohr an, da es im Bereich des Anschlagelements angeordnet ist, also dort, wo das eingeschobene Rohr anliegt und endet. Die Spaltfreiheit dient einer verbesserten Hygiene, da Toträume und stagnationsbehaftete Bereiche vermieden werden.

Die Sicherung des Rohres gegen Auszug und/oder gegen zu hohen Innendruck erfolgt über den Klemmring, der für eine Aufnahme bzw. für ein Halten der Klemmelemente sorgt. Die Klemmelemente nehmen die Auszugskraft auf, indem sie punktuell das Rohr verformen und sich an der Wand der Presshülse abstützen. Somit ist ein direkter Kraftfluss von dem Rohr über die Presshülse in das Fitting gewährleistet. Der Klemmring selbst hat nach dem Verpressen lediglich eine stützende Funktion und trägt nur geringfügig oder gar nicht zur Auszugssicherung bei.

Der Klemmring des hier beschriebenen Fittings ist als Kunststoffklemmring ausgebildet, in den metallische Schneiden als Klemmelemente montiert sind. Der Kunststoffring weist weiterhin axial verlaufende Schlitze auf, die den Klemmring flexibel machen und somit die Montage in dem Fitting innerhalb der Presshülse erleichtern.

Die Klemmelemente bzw. die Schneiden können als Drahtelemente ausgeführt sein, die in dafür vorgesehene Ausnehmungen angeordnet sind. Eine alternative Ausführungsform des Klemmrings ist ein aus zwei Komponenten bestehender Klemmring, bei dem die Schneiden im Spritzgießwerkzeug platziert werden und anschließend umspritzt werden.

Die Fixierung der Klemmelemente im Kunststoff des Klemmrings kann kraftschlüssig, formschlüssig oder stoffschlüssig, beispielsweise über Haftvermittler erfolgen. Die Klemmelemente können in verschiedener Weise hergestellt sein, beispielsweise als Gussteile oder als Stanzteile. Die Anzahl der Klemmelemente kann je nach Anforderung bzw. Dimension festgelegt werden, bevorzugt sind mindestens drei Klemmelemente vorgesehen. Gleiche Klemmelemente können zudem für Fittings für verschiedene Rohrdimensionen eingesetzt werden.

Weiterhin ist es bevorzugt, dass die im Klemmring integrierten Klemmelemente im distalen, den Anschlagelementen gegenüberliegenden Bereich der Kammer angeordnet sind. Beim Verpressen der Presshülse werden die Klemmelemente schräg und entgegen der Auszugsrichtung des Rohres zwischen der verformten Presshülse und der Rohrwandung eingeklemmt und erzeugen eine Gegenkraft entgegen der Auszugsrichtung. Diese Anordnung ermöglicht eine effektive Fixierung des Rohres im verpressten Fitting.

Des Weiteren kann der Klemmring beabstandet zu den Klemmelementen nach innen gerichtete Stege aufweisen, wobei die Stege abschnittsweise azimutal einen Innenquerschnitt definieren, der gleich groß oder geringfügig kleiner als der Außendurchmesser des Rohres ist. Der Klemmring bewirkt durch die Stege eine Rohrhaltefunktion. Die Stege halten das eingesteckte Rohr im unverpressten Zustand des Fittings, so dass das Rohr ohne größere Zugkraft nicht aus dem Fitting herausrutschen kann. Zudem bilden die Stege eine Führung des Rohres beim Einschieben in das Fitting. Ist der Innenquerschnitt geringfügig kleiner als der Außendurchmesser des Rohres, so wird dem Rohr beim Einschieben zudem ein geringer Widerstand geboten. Somit erhält der Benutzer beim Einschieben des Rohres ein haptisches Feedback dafür, dass das Rohr tief genug in das Fitting eingesteckt ist.

Der Klemmring kann grundsätzlich auch - wie aus dem Stand der Technik bekannt - als klassischer metallischer Schneidring oder umlaufender Drahtring ausgeführt sein.

Die beschriebene Ausführungsform ermöglicht das Einführen des starren Rohres bis zu dem Anschlagelement, um dem Benutzer zu signalisieren, dass das zu verbindende Rohr ausreichend tief in das Fitting eingeschoben worden ist. In bevorzugter Weise besteht das Anschlagelement aus mindestens zwei nach innen gerichteten Vertiefungen, beispielsweise Körnerpunkten, vorzugsweise drei Körnerpunkten. Im Gegensatz zu einer vollständig umlaufenden Vertiefung, entstehen bei einzelnen Vertiefungen wiederum weniger Toträume und somit hygienisch verbesserte Bedingungen.

Weiterhin ist es bevorzugt, dass die Dichtung zumindest abschnittsweise als Lippendichtung ausgebildet ist und nach einem Verpressen den Spalt zwischen dem Rohr und der Presshülse bis zum Ende des eingesteckten Rohres abdichtet. Somit wird ein hohes Maß an Hygiene sichergestellt und eine Spaltkorrosion vermieden. Dadurch, dass die Dichtung zumindest abschnittsweise geometrisch als Lippendichtung ausgeführt ist, ist nach dem Verpressen des Fittings der Spalt zwischen Rohr und Fitting vollständig bis zum Ende des Rohres durch das Dichtelement verschlossen. Somit werden, insbesondere in Verbindung mit dem beschriebenen punktuellen Rohranschlag, Toträume vermieden, in denen sich Medien sammeln können. Die Lippendichtung sorgt daher für die erforderliche Systemdichtigkeit. Alternativ ist auch eine Ausführung des Dichtelements als klassischer O-Ring möglich.

Ein weiterer Vorteil besteht darin, dass das Rohr durch den Kraftübertragungsring flächig geführt und gehalten wird. Dadurch entsteht beim Verpressen des Fittings ein geringeres Schiefziehen des Rohres.

Eine Ausführungsform eines Fittings zum Verbinden mit einem flexiblen Rohr für ein zuvor beschriebenes System, das das oben aufgezeigte technische Problem löst, weist einen Aufbau auf mit einem Grundkörper, mit einer mit dem Grundkörper verbundenen und eine Außenkontur bildenden Presshülse, wobei die Presshülse eine nach innen zum aufzunehmenden Rohr hin gerichtete Kammer aufweist, mit einem in der Kammer angeordneten Kraftübertragungsring und mit einem mit dem Grundkörper verbundenen und mit einer nach außen zum einzuschiebenden Rohr gerichteten Dichtkontur versehenen Stützkörper, wobei ein Abschnitt des Kraftübertragungsrings axial aus der Presshülse herausragt und einen Abschnitt der zu verpressenden Außenkontur bildet, wobei die Presshülse zusammen mit dem Kraftübertragungsring und dem Stützkörper das zu verbindende flexible Rohr von innen abdichtet,

Die Presshülse einschließlich des Kraftübertragungsrings und der Stützkörper sind dabei beabstandet zueinander angeordnet und definieren einen ringförmigen Raum zum Einführen und Aufnehmen des flexiblen Rohres. Der in der Kammer angeordnete Kraftübertragungsring überträgt beim Verpressen die durch die Pressbacke erzeugte Presskraft über die Presshülse auf das flexible Rohr und presst das Rohr radial nach innen auf den Stützkörper. Die in der Außenseite des Stützkörpers angeordnete Dichtkontur wird in das Material des flexiblen Rohrs eingedrückt, wodurch eine Fixierung und eine Abdichtung des flexiblen Rohres gegenüber dem Fitting erzeugt werden. Die Abdichtung des Fittings gegenüber dem Rohr wird bevorzugt ohne zusätzliche Weichdichtung über die Dichtkontur und die Kraftübertragung durch den Kraftübertragungsring, der als Kunststoffring ausgebildet sein kann, gewährleistet.

Zusätzlich oder alternativ dazu kann eine zusätzliche Weichdichtung, beispielsweise ein O-Ring oder eine Flachdichtung, beispielsweise aus Ethylen-Propylen-Dien-(Monomer)-Kautschuk (EPDM), Fluorkarbon-Kautschuk (FKM) oder Polytetrafluorethylen (PTFE), vorgesehen sein. In beiden Fällen erfolgt die Abdichtung vorzugsweise am äußeren dem Rohr zugewandten Ende des Stützkörpers, so dass hier keine oder nur geringe Toträume entstehen.

Die Presshülse oder der Stützkörper sind einteilig mit dem Grundkörper ausgebildet. Sie können aber auch entweder stoffschlüssig, beispielsweise durch Verschweißen oder Verkleben, oder kraftschlüssig, beispielsweise durch Aufpressen oder Aufschieben, mit dem Grundkörper verbunden sein.

Der Stützkörper ist zur Abdichtung des flexiblen Rohres, insbesondere eines Mehrschichtverbundrohres, gegenüber dem Fitting erforderlich. Der Stützkörper ist bevorzugt aus Metall hergestellt und ermöglicht eine deutlich verbesserte Chemikalienbeständigkeit und Robustheit gegenüber Stützkörpern aus einem festen Kunststoff wie beispielsweise Polyphenylensulfon (PPSU).

Der Abschnitt des Kraftübertragungsrings, der axial aus der Presshülse herausragt, bildet einen Abschnitt der zu verpressenden Außenkontur. In diesem Fall ist die von der Presshülse ausgebildete Kammer axial seitlich offen und wird durch den Kraftübertragungsring seitlich geschlossen. Der herausragende Abschnitt des Kraftübertragungsrings dient nicht nur für eine verbesserte Kraftübertragung auf das flexible Rohr, sondern dient auch einer optischen Unterscheidung zu einem Fitting für starre Rohre mit gleicher Außenkontur eines oben beschriebenen Systems. Denn ein Fitting für starre Rohre weist eine vollständig aus Metall hergestellte Presshülse auf. Zudem lässt sich diese Ausgestaltung des Kraftübertragungsringes leichter in der Presshülse montieren.

Des Weiteren können der Hülsenabschnitt und/oder das Kraftübertragungsring nach innen ragende Nocken zur Führung und Halterung des Rohres aufweisen. Dadurch werden eine Halterung des Rohres, ein haptisches Feedback beim Überwinden der Nocken während des Einschiebens des Rohres und auch eine Führung des Rohres beim Einschieben erreicht.

Weiterhin kann die Presshülse nach innen gerichtete Vertiefungen, beispielsweise ausgebildet als Körnerpunkte oder Hinterschnitte in der Wandung, für eine innen angeordnete Verrastung des Kraftübertragungsrings mit der Presshülse aufweisen.

Des Weiteren kann der Kraftübertragungsring einen zylindrischen Abschnitt und/oder einen gezahnten Abschnitt zur Anlage an dem einzuschiebenden Rohr aufweisen, um die Fixierung zu erzeugen.

Eine Sicherung gegen Auszug des Rohres erfolgt beispielsweise über entsprechende Halterippen der Dichtkontur des Stützkörpers.

Der Kraftübertragungsring kann darüber hinaus nach innen ragende Stege aufweisen, die einen Innenquerschnitt definieren, der gleich groß wie oder geringfügig kleiner als der Außendurchmesser des Rohres ist. Dadurch bilden die umfangseitig verteilt angeordneten Stege eine Führung und Halterung für das Rohr.

Eine weitere Ausführungsform eines Fittings zum Verbinden mit einem starren Rohr für ein zuvor beschriebenes System, das das oben aufgezeigte technische Problem löst, weist einen Aufbau auf mit einem Grundkörper, mit einer mit dem Grundkörper verbundenen und eine Außenkontur bildenden Presshülse, wobei die Presshülse eine nach innen zum aufzunehmenden Rohr hin gerichtete Kammer aufweist, mit einem am distalen Ende der Presshülse ausgebildeten und über die Kammer hinausgehenden Hülsenabschnitt, wobei der Hülsenabschnitt einen Abschnitt der umzuformenden Außenkontur bildet, und mit einem in der Kammer angeordneten Dichtelement, wobei sich ein Innenabschnitt des Grundkörpers in Richtung des einzuschiebenden Rohres radial innerhalb der Kammer erstreckt, wobei ein Abschnitt des Dichtelements zwischen der Presshülse und dem Innenabschnitt des Grundkörpers angeordnet ist und wobei ein Abschnitt des Dichtelements zwischen der Presshülse und dem einzuschiebenden Rohr angeordnet ist, wobei die Presshülse zusammen mit dem Dichtelement das zu verbindende starre Rohr von außen abdichtet.

Das Dichtelement füllt somit bevorzugt einen wesentlichen Teil der Kammer oder die Kammer ganz aus. Das Dichtelement dichtet sowohl auf der Seite des Grundkörpers als auch auf dem starren Rohr ab, das stirnseitig bis an den Grundkörper eingeschoben ist. Das sich axial erstreckende Dichtelement erlaubt weiterhin eine hohe Toleranz der korrekten Einstecktiefe des Rohres und sorgt für eine nahezu spaltfreie Verbindung.

Somit wird eine zuverlässige Abdichtung und eine Aufteilung in einen medienberührten Bereich mit dem Innenabschnitt des Grundkörpers und dem Ende des eingeschobenen Rohres und in einen nicht medienberührten Bereich der Presshülse gewährleistet. Zudem können der Innenabschnitt des Grundkörpers und das Ende des eingeschobenen Rohres zudem stirnseitig aneinander anliegen. Dadurch entsteht eine besonders gute Verbindung ohne Einschränkung des offenen Querschnitts innerhalb des Rohres und innerhalb des Grundkörpers des Fittings.

Auch bei dieser Ausführungsform sind die Fixierfunktion und die Dichtfunktion durch zwei separate Elemente verwirklicht. Dabei ist in bevorzugter Weise die Presshülse formschlüssig auf den Grundkörper aufgeformt oder stoffschlüssig mit dem Grundkörper verbunden.

In bevorzugter Weise weist der Hülsenabschnitt und/oder das Dichtelement nach innen ragende Nocken zur Führung und Halterung des Rohres auf. Dadurch werden eine Halterung des Rohres, ein haptisches Feedback beim Überwinden der Nocken während des Einschiebens des Rohres und auch eine Führung des Rohres beim Einschieben erreicht.

Weiterhin können im vorderen distalen Abschnitt der Presshülse werkseitig Nocken eingeprägt sein, die einer lokalen Verformung des starren Rohres beim Verpressen dienen. Daher ist bei diesem Aufbau kein Klemmring mit Haltefunktion notwendig. Darüber hinaus wird nach dem Verpressen mit den Nocken eine Verdrehfestigkeit sichergestellt. Die Nocken können auch einer Führung und einem Halten des Rohres dienen.

Alternativ ist auch eine Ausführung des beschriebenen Fittings mit in der Kammer eingesetztem Schneidring möglich. **In** diesem Fall kann das Dichtelement in axialer Richtung kürzer als bei dem zuvor erläuterten Ausführungsbeispiel ausgeführt sein.

Eine Ausführungsform eines Fittings zum Verbinden mit einem flexiblen Rohr für ein zuvor beschriebenes System, das das oben aufgezeigte technische Problem löst, weist einen Aufbau auf mit einem Grundkörper, mit einer mit dem Grundkörper verbundenen und eine Außenkontur bildenden Presshülse, wobei die Presshülse eine nach innen zum aufzunehmenden Rohr hin gerichtete Kammer aufweist, mit einem in der Kammer angeordneten Kraftübertragungsring und mit einem mit dem Grundkörper verbundenen und mit einer nach außen zum einzuschiebenden Rohr gerichteten Dichtkontur versehenen Stützkörper, wobei Presshülse und der Kraftübertragungsring zueinander korrespondierende Sichtfenster aufweisen, wobei die Presshülse zusammen mit dem Kraftübertragungsring und dem Stützkörper das zu verbindende flexible Rohr von innen abdichtet.

Die Sichtfenster dienen einer optischen Einschubkontrolle, um sicherzustellen, dass das zu verbindende Rohr genügend weit in das Fitting eingeschoben worden ist.

Die Presshülse einschließlich des Kraftübertragungsrings und der Stützkörper sind dabei beabstandet zueinander angeordnet und definieren einen Raum zum Einführen und Aufnehmen des flexiblen Rohres. Der in der Kammer angeordnete Kraftübertragungsring überträgt beim Verpressen die durch die Pressbacke erzeugte Presskraft auf das flexible Rohr und presst das Rohr radial nach innen auf den Stützkörper. Die in der Außenseite des Stützkörpers angeordnete Dichtkontur wird in das Material des flexiblen Rohrs eingedrückt, wodurch eine Fixierung und eine Abdichtung des flexiblen Rohres gegenüber dem Fitting erzeugt werden.

In bevorzugter Weise sind die Presshülse und der Stützkörper als separate Elemente ausgebildet und mit dem Grundkörper verbunden. Alternativ dazu können die Presshülse oder der Stützkörper einteilig mit dem Grundkörper ausgebildet sein. Sie können dabei entweder stoffschlüssig, beispielsweise durch Verschweißen oder Verkleben, oder kraftschlüssig, beispielsweise durch Aufpressen oder Aufschieben, mit dem Grundkörper verbunden sein.

Der Stützkörper ist zur Abdichtung des flexiblen Rohres, insbesondere eines Mehrschichtverbundrohres, gegenüber dem Fitting erforderlich. Der Stützkörper ist bevorzugt aus Metall hergestellt und ermöglicht eine deutlich verbesserte Chemikalienbeständigkeit und Robustheit gegenüber Stützkörpern aus einem festen Kunststoff wie beispielsweise Polyphenylensulfon (PPSU).

Des Weiteren können der Hülsenabschnitt und/oder der Kraftübertragungsring nach innen ragende Nocken zur Führung und Halterung des Rohres aufweisen. Dadurch werden eine Halterung des Rohres, ein haptisches Feedback beim Überwinden der Nocken während des Einschiebens des Rohres und auch eine Führung des Rohres beim Einschieben erreicht.

Des Weiteren kann der Kraftübertragungsring einen zylindrischen Abschnitt und/oder einen gezahnten Abschnitt zur Anlage an dem einzuschiebenden Rohr aufweisen, um die Fixierung zu erzeugen. Über die Anpassung der Wandstärke kann der geometrische Unterschied zwischen den Außendurchmessern der flexiblen Rohre ausgeglichen werden.

Die Abdichtung des Fittings gegenüber dem Rohr wird bevorzugt ohne zusätzliche Weichdichtung über die Dichtkontur und die Kraftübertragung durch den Kraftübertragungsring, der als Kunststoffring ausgebildet sein kann, gewährleistet. Durch das Umformen der Presshülse beim Verpressen wird das flexible Rohr auf die Dichtkontur aufgepresst, wodurch eine abdichtende Wirkung erreicht wird.

Zusätzlich oder alternativ dazu kann eine zusätzliche Weichdichtung, beispielsweise ein O-Ring oder eine Flachdichtung, beispielsweise aus Ethylen-Propylen-Dien-(Monomer)-Kautschuk (EPDM), Fluorkarbon-Kautschuk (FKM) oder Polytetrafluorethylen (PTFE), vorgesehen sein. In beiden Fällen erfolgt die Abdichtung vorzugsweise am äußeren dem Rohr zugewandten Ende des Stützkörpers, so dass hier keine oder nur geringe Toträume entstehen.

Eine Sicherung gegen Auszug des Rohres erfolgt beispielsweise über entsprechende Halterippen der Dichtkontur des Stützkörpers.

Bei einer bevorzugten Ausgestaltung weist die Presshülse einen über die Kammer hinausgehenden Hülsenabschnitt auf, wobei der Hülsenabschnitt einen Abschnitt der durch eine Pressbacke umzuformenden Außenkontur bildet. Der Hülsenabschnitt dient einem Verformen in Richtung des Rohres, um eine axiale Fixierung und gegebenenfalls auch eine Drehsicherung des Rohres gegenüber dem Fitting zu erreichen. Somit kann der Kraftübertragungsring auch indirekt die Dichtfunktion übernehmen und der beschriebene Hülsenabschnitt dient der Fixierung.

Der Kraftübertragungsring kann darüber hinaus nach innen ragende Stege aufweisen, die einen Innenquerschnitt definieren, der gleich groß wie oder geringfügig kleiner als der Außendurchmesser des Rohres ist. Dadurch bilden die umfangseitig verteilt angeordneten Stege eine Führung und Halterung für das Rohr.

Das oben aufgezeigte technische Problem wird auch durch ein System zum Verbinden von starren Rohren und zum Verbinden von flexiblen Rohren gelöst mit einer Mehrzahl von ersten Fittings zum Verbinden mit einem starren Rohr, wobei die ersten Fittings als außen abdichtende Fittings ausgebildet sind und zu verbindende starre Rohre von außen abdichten, und mit einer Mehrzahl von zweiten Fittings zum Verbinden mit einem flexiblen Rohr, wobei die zweiten Fittings als innen abdichtende Fittings ausgebildet sind und zu verbindende flexible Rohr von innen abdichten, wobei die ersten Fittings zum Verbinden mit einem starren Rohr einen Grundkörper und eine mit dem Grundkörper verbundene Presshülse aufweisen, wobei die zweiten Fittings zum Verbinden mit einem flexiblen Rohr einen Grundkörper, eine mit dem Grundkörper verbundene Presshülse und einen mit dem Grundkörper verbundenen Stützkörper aufweisen, wobei der Grundkörper des ersten Fittings zum Verbinden mit einem starren Rohr und der Grundkörper des zweiten Fittings zum Verbinden mit einem flexiblen Rohr einen gleichen Aufbau aufweisen.

Dabei wird von einem gleichen Aufbau ausgegangen, wenn die Grundkörper die gleichen Abmessungen und eine gleiche Geometrie aufweisen, sich aber in der Größenordnung von Herstellungstoleranzen voneinander unterscheiden. Das Ziel ist eine Produktion der Grundkörper in großer Stückzahl, die anschließend sowohl für Fittings für starre Rohre als für Fittings für flexible Rohre verwendet werden können.

In bevorzugter Weise entsprechen die Fittings den zuvor beschriebenen Fittings zum Verbinden mit einem starren Rohr und den zuvor beschriebenen Fittings zum Verbinden mit einem flexiblen Rohr.

Die zuvor beschriebenen Fittings für das System zum Verbinden von starren Rohren und zum Verbinden von flexiblen Rohren weisen demnach denselben Grundkörper und jeweils eine damit verbundene angepasste Presshülse auf. Für flexible Rohre kommt noch der Stützkörper hinzu. Die Grundkörper können daher lediglich geringe Umformgerade aufweisen und können somit auch aus schwer umformbaren Materialien, beispielsweise aus Ferritischen Stählen wie 1.4521 oder Duplex-Stählen wie 1.4462, gefertigt werden. Derselbe Grundkörper kann somit sowohl in dem Fitting für starre Rohre als auch flexible Rohre eingesetzt werden und ermöglicht somit einen modularen Aufbau der Fittings für das beschriebene System. Diese Ausgestaltung hat produktionsbedingte Vorteile, da für alle Fittings des Systems ein gleiches Bauteil als Basis verwendet wird.

Die Presshülse unterscheidet sich jedoch in der jeweiligen Anwendung für starre Rohre und flexible Rohre und wird beispielsweise kraftschlüssig durch werkseitiges Verpressen auf den Grundkörper montiert. Ein Vorteil des zweiteiligen Aufbaus aus Grundkörper und Presshülse liegt darin, dass das Fitting in einen medienberührten Grundkörper und eine nicht medienberührte Presshülse aufgeteilt wird. Somit ist es beispielsweise möglich, den Grundkörper aus einem sehr hochwertigen, korrosionsbeständigen Material zu fertigen, für die Hülse hingegen ein kostengünstiges Material einzusetzen. Grundsätzlich kann hier die Materialauswahl spezifisch im Hinblick auf die jeweilige Anforderung, also an das mit dem starren Rohr und/oder mit dem flexiblen Rohr zu führende Medium erfolgen.

Alle zuvor beschriebenen Fittings sollen des Weiteren geometrisch mit einer flachen Kammer und mit möglichst weichen Übergängen ausgebildet sein, so dass eine nachträgliche Dämmung erleichtert wird. Denn durch die flache Kammer und die weichen Übergänge kann ein Wärmedämmrohr leichter auf das Rohr und den Fitting aufgeschoben werden, ohne sich an Vorsprüngen oder Kanten zu verklemmen. Bevorzugt wird das Verhältnis von Kammerhöhe zu Kammerlänge klein gewählt, werden große Radien eingesetzt, keine Sicken oder scharfen Kanten ausgeformt und/oder der Übergang zwischen den verschiedenen Stufen als Schräge, vorzugsweise mit einem kleinen Winkel ausgebildet.

Die zuvor beschriebenen Fittings weisen zudem den Vorteil eines robusten Aufbaus im Vergleich zu Kunststofffittings auf. Viele robuste metallische Komponenten werden in den Fittings integriert, so dass beispielsweise nur geringe oder keine Beschädigungen des Stützkörpers beim Biegen des Rohres auftreten. Durch den Einsatz von Schneidelementen bei Fittings für starre Rohre wird ebenfalls eine Erhöhung der Robustheit erreicht, da kein Reibschluss sondern ein Formschluss die Fixierung bewirkt.

Im Folgenden werden Ausführungsformen 1 - 13 eines bzw. des Systems zum Verbinden von starren Rohren und zum Verbinden von flexiblen Rohren, Ausführungsformen 14 - 18 eines bzw. des Fittings zum Verbinden mit einem starren Rohr, Ausführungsform 19 eines bzw. des Fittings zum Verbinden mit einem flexiblen Rohr, Ausführungsform 20 - 21 eines bzw. des Fittings zum Verbinden mit einem starren Rohr, Ausführungsformen 22 - 23 eines bzw. des Fittings zum Verbinden von flexiblen Rohren und Ausführungsformen 24 - 25 eines bzw. des Systems zum Verbinden von starren Rohren und zum Verbinden von flexiblen Rohren beschrieben:

1. System zum Verbinden von starren Rohren und zum Verbinden von flexiblen Rohren, wobei die Rohre zueinander korrespondierende Außendurchmesser aufweisen,

- mit einer eine Presskontur aufweisenden Pressbacke,
- mit mindestens einem ersten Fitting zum Pressverbinden mit einem starren Rohr,

   -- wobei das mindestens eine erste Fitting als ein außen abdichtendes Fitting ausgebildet ist und ein zu verbindendes starres Rohr von außen abdichtet und
   -- wobei das mindestens eine erste Fitting eine erste Presshülse mit einer ersten Außenkontur aufweist,

- mit mindestens einem zweiten Fitting zum Pressverbinden mit einem flexiblen Rohr,

   -- wobei das mindestens eine zweite Fitting als ein innen abdichtendes Fitting ausgebildet ist und ein zu verbindendes flexibles Rohr von innen abdichtet und
   -- wobei das mindestens eine zweite Fitting eine zweite Presshülse mit einer zweiten Außenkontur aufweist,

- wobei die Außenkontur der ersten Presshülse und die Außenkontur der zweiten Presshülse jeweils zumindest abschnittsweise an die Presskontur der Pressbacke angepasst sind und durch die Pressbacke verpressbar sind.

2. System nach Ausführungsform 1,
dadurch gekennzeichnet,
dass die Außenkonturen der ersten Presshülse und der zweiten Presshülse zumindest abschnittsweise übereinstimmen.

3. System nach Ausführungsform 1 oder 2,
dadurch gekennzeichnet,

   - dass die Presshülsen eine zum aufzunehmenden Rohr nach innen hin gerichtete Kammer ausbilden und
   - dass jeweils mindestens ein Klemmelement, Dichtelement und/oder Kraftübertragungselement in der Kammer aufgenommen ist.

4. System nach Ausführungsform 3,
dadurch gekennzeichnet,
dass die Kammer der ersten Presshülse und die Kammer der zweiten Presshülse unterschiedliche Klemmelemente, Dichtelemente und/oder Kraftübertragungselemente aufnehmen.

5. System nach einer der Ausführungsformen 1 bis 4,
dadurch gekennzeichnet,

   - dass die erste Presshülse einen ersten zusätzlichen Pressabschnitt aufweist,
   - dass die zweite Presshülse einen zweiten zusätzlichen Pressabschnitt aufweist,
   - wobei der erste zusätzliche Pressabschnitt und der zweite zusätzliche Pressabschnitt voneinander abweichende Außenkonturen aufweisen und jeweils abschnittsweise durch die Pressbacke umformbar sind.

6. System nach einer der Ausführungsformen 1 bis 5,
dadurch gekennzeichnet,
dass das erste Fitting und/oder das zweite Fitting nach einer der Ausführungsformen 6 bis 21 ausgebildet sind.

7. System nach einer der Ausführungsformen 3 bis 6,
dadurch gekennzeichnet,

- dass das Verhältnis des Volumens V(starr) der Kammer der Presshülse des ersten Fittings zu dem Volumen V(flex) der Kammer der Presshülse des zweiten Fittings gegeben ist durch $\delta = \frac{V(starr)}{V(flex)}$,

- dass das Volumen V(starr) gegeben ist durch

$$V(starr) = \frac{\pi \cdot LK(starr)}{4} \cdot (DK(starr)^2 - DR(starr)^2),$$

mit LK(starr) der Länge der Kammer,
mit DK(starr) dem Innendurchmesser der Kammer und
mit DR(starr) dem Außendurchmesser des aufzunehmenden starren Rohres,

- dass das Volumen V(flex) gegeben ist durch

$$V(flex) = \frac{\pi \cdot LK(flex)}{4} \cdot (DK(flex)^2 - DR(flex)^2),$$

mit LK(flex) der Länge der Kammer,
mit DK(flex) dem Innendurchmesser der Kammer und
mit DR(flex) dem Durchmesser des aufzunehmenden flexiblen Rohres,

- dass das Verhältnis gegeben ist durch

$$\delta = \frac{V(starr)}{V(flex)} = \frac{LK(starr)}{LK(flex)} \cdot \frac{(DK(starr)^2 - DR(starr)^2)}{(DK(flex)^2 - DR(flex)^2)},$$

und

- dass $\delta$ Werte aus einem Wertebereich [0,50; 3,00], bevorzugt [0,50; 1,50], besonders bevorzugt [0,75; 1,25] annimmt.

8. System nach einer der Ausführungsformen 3 bis 7,
dadurch gekennzeichnet,

- dass das Verhältnis der Differenz des Innendurchmessers DK(starr) der Kammer der Presshülse des ersten Fittings und des Außendurchmessers DR(starr) des aufzunehmenden starren Rohres zu der doppelten Länge LK(starr) der Kammer gegeben ist durch $\varepsilon(starr) = \frac{DK(starr) - DR(starr)}{2 \cdot LK(starr)}$ , und
- dass $\varepsilon$(starr) Werte aus einem Wertebereich [0,10; 0,50], bevorzugt [0,2; 0,4], besonders bevorzugt [0,25; 0,35], annimmt.

9. System nach einer der Ausführungsformen 3 bis 8,
dadurch gekennzeichnet,

- dass das Verhältnis der Differenz des Innendurchmessers DK(flex) der Kammer der Presshülse des zweiten Fittings und des Außendurchmessers DR(flex) des aufzunehmenden flexiblen Rohres zu der doppelten Länge LK(flex) der Kammer gegeben ist durch $\varepsilon(flex) = \frac{DK(flex) - DR(flex)}{2 \cdot LK(flex)}$ , und dass $\varepsilon$(starr) Werte aus einem Wertebereich [0,10; 0,70], insbesondere [0,10; 0,50], bevorzugt [0,20; 0,60], insbesondere [0,2; 0,4], besonders bevorzugt [0,25; 0,50], insbesondere [0,25; 0,35] annimmt.

10. System nach einer der Ausführungsformen 3 bis 9,
dadurch gekennzeichnet,

- dass $\varepsilon$(starr) gegeben ist durch

$$\varepsilon(starr) = \frac{DK(starr) - DR(starr)}{2 \cdot LK(starr)},$$

mit dem Innendurchmesser DK(starr) der Kammer der Presshülse des ersten Fittings und

mit dem Außendurchmesser DR(starr) des aufzunehmenden starren Rohres und
mit der Länge LK(starr) der Kammer,

- dass ε(flex) gegeben ist durch

$$\varepsilon(flex) = \frac{DK(flex) - DR(flex)}{2 \cdot LK(flex)},$$

mit dem Innendurchmesser DK(flex) der Kammer der Presshülse des zweiten Fittings und
mit dem Außendurchmesser DR(flex) des aufzunehmenden flexiblen Rohres und
mit der Länge LK(flex) der Kammer,

- dass das Verhältnis α gegeben ist durch

$$\alpha = \frac{\varepsilon(starr)}{\varepsilon(flex)} = \frac{LK(flex)}{LK(starr)} \cdot \frac{(DK(starr) - DR(starr))}{(DK(flex) - DR(flex))}$$

und

- dass α Werte aus einem Wertebereich [0,50; 3,00], bevorzugt [0,50; 1,50], besonders bevorzugt [0,75; 1,25], annimmt.

11. System nach einer der Ausführungsformen 3 bis 9,
dadurch gekennzeichnet,

- dass der Verpressungsgrad β(starr) beim Pressverbinden des ersten Fittings mit einem starren Rohr gegeben ist durch

$$\beta(starr) = \frac{DK(starr) + 2s(starr) - DPK(starr)}{DR(starr)},$$

mit dem Innendurchmesser DK(starr) der Kammer der Presshülse des ersten Fittings vor dem Verpressen,
mit der Wanddicke s(starr) der Presshülse im zu verpressenden Bereich des ersten Fittings vor dem Verpressen ,
mit dem Außendurchmesser DR(starr) des aufzunehmenden starren Rohrs vor dem Verpressen und
mit dem Innendurchmesser DPK(starr) der Presskontur der Pressbacke im zu verpressenden Bereich des ersten Fittings nach dem Verpressen, und

- dass β(starr) Werte mit β(starr)<0,15, bevorzugt β(starr)<0,12, besonders bevorzugt β(starr)<0,10 annimmt.

12. System nach einer der Ausführungsformen 3 bis 11,
dadurch gekennzeichnet,

- dass der Verpressungsgrad β(flex) beim Pressverbinden des zweiten Fittings mit einem flexiblen Rohr gegeben ist durch

$$\beta(flex) = \frac{DK(flex) + 2s(flex) - DPK(flex)}{DR(flex)},$$

mit dem Innendurchmesser DK(flex) der Kammer der Presshülse des zweiten Fittings vor dem Verpressen,
mit der Wanddicke s(flex) der Presshülse im zu verpressenden Bereich des zweiten Fittings vor dem Verpressen,
mit dem Außendurchmesser DR(flex) des aufzunehmenden flexiblen Rohrs vor dem Verpressen und
mit dem Innendurchmesser DPK(flex) der Presskontur der Pressbacke im zu verpressenden Bereich des zweiten Fittings nach dem Verpressen, und

- dass β(flex) Werte mit β(flex)<0,15, bevorzugt β(flex)<0,12, besonders bevorzugt β(flex) <0,10 annimmt.

13. System nach einer der Ausführungsformen 3 bis 12,
dadurch gekennzeichnet,

- dass der Verpressungsgrad β(starr) beim Pressverbinden des ersten Fittings mit einem starren Rohr gegeben ist durch

$$\beta(starr) = \frac{DK(starr)+2s(starr)-DPK(starr)}{DR(starr)},$$

mit dem Innendurchmesser DK(starr) der Kammer der Presshülse des ersten Fittings vor dem Verpressen, mit der Wanddicke s(starr) der Presshülse im zu verpressenden Bereich des ersten Fittings vor dem Verpressen, mit dem Außendurchmesser DR(starr) des aufzunehmenden starren Rohrs vor dem Verpressen und mit dem Innendurchmesser DKP(starr) der Pressbacke im zu verpressenden Bereich des ersten Fittings nach dem Verpressen,

- dass der Verpressungsgrad β(flex) beim Pressverbinden des zweiten Fittings mit einem flexiblen Rohr gegeben ist durch

$$\beta(flex) = \frac{DK(flex)+2s(flex)-DPK(flex)}{DR(flex)},$$

mit dem Innendurchmesser DK(flex) der Kammer der Presshülse des zweiten Fittings vor dem Verpressen, mit der Wanddicke s(flex) der Presshülse im zu verpressenden Bereich des zweiten Fittings vor dem Verpressen, mit dem Außendurchmesser DR(flex) des aufzunehmenden flexiblen Rohres vor dem Verpressen und mit dem Innendurchmesser DPK(flex) der Presskontur der Pressbacke im zu verpressenden Bereich des zweiten Fittings nach dem Verpressen,

- dass das Verhältnis τ gegeben ist durch

$$\tau = \frac{\beta(starr)}{\beta(flex)} = \frac{DK(starr)+2s(starr)-DPK(starr)}{DK(flex)+2s(flex)-DPK(flex)} \frac{DR(flex)}{DR(starr)},$$

und

- dass τ Werte aus einem Wertebereich [0,50; 1,50], bevorzugt [0,75; 1,25], besonders bevorzugt [0,80; 1,20] annimmt.

14. Fitting zum Verbinden mit einem starren Rohr für ein System nach einer der Ausführungsformen 1 bis 13,

- mit einem Grundkörper,
- mit einem in dem Grundkörper umfangseitig ausgebildeten und nach innen vorstehenden Anschlagelement,
- mit einer mit dem Grundkörper verbundenen und eine Außenkontur bildenden Presshülse, wobei die Presshülse eine nach innen zum aufzunehmenden Rohr hin gerichtete Kammer aufweist,
- mit einem in der Kammer angeordneten Klemmring, wobei der Klemmring aus einem Kunststoff besteht und eine Mehrzahl von entgegen der Auszugsrichtung des einzuschiebenden Rohres ausgerichteten Klemmelementen aufweist, und
- mit einem in der Kammer angrenzend an das Anschlagelement angeordneten Dichtelement,
- wobei die Presshülse zusammen mit dem Klemmring, den Klemmelementen und dem Dichtelement das zu verbindende starre Rohr von außen abdichtet.

15. Fitting nach Ausführungsform 14,
dadurch gekennzeichnet,

dass die Klemmelemente im distalen, den Anschlagelementen gegenüberliegenden Bereich der Kammer angeordnet sind.

16. Fitting nach Ausführungsform 14 oder 15,
dadurch gekennzeichnet,
dass der Klemmring beabstandet zu den Klemmelementen nach innen gerichtete Stege aufweist, wobei die Stege einen Innenquerschnitt definieren, der gleich groß oder geringfügig kleiner als der Außendurchmesser des Rohres ist.

17. Fitting nach einer der Ausführungsformen 14 bis 16,
dadurch gekennzeichnet,
dass das Anschlagelement aus mindestens zwei nach innen gerichteten Vertiefungen, beispielsweise Körnerpunkten, besteht.

18. Fitting nach einer der Ausführungsformen 14 bis 17,
dadurch gekennzeichnet,
dass die Dichtung zumindest abschnittsweise als Lippendichtung ausgebildet ist und nach einem Verpressen den Spalt zwischen dem Rohr und der Presshülse bis zum Ende des eingesteckten Rohres abdichtet.

19. Fitting zum Verbinden mit einem flexiblen Rohr für ein System nach einer der Ausführungsformen 1 bis 13,

- mit einem Grundkörper,
- mit einer mit dem Grundkörper verbundenen und eine Außenkontur bildenden Presshülse, wobei die Presshülse eine nach innen zum aufzunehmenden Rohr hin gerichtete Kammer aufweist,
- mit einem in der Kammer angeordneten Kraftübertragungsring und
- mit einem mit dem Grundkörper verbundenen und mit einer nach außen zum einzuschiebenden Rohr gerichteten Dichtkontur versehenen Stützkörper,
- wobei ein Abschnitt des Kraftübertragungsrings axial aus der Presshülse herausragt und einen Abschnitt der zu verpressenden Außenkontur bildet,
- wobei die Presshülse zusammen mit dem Kraftübertragungsring und dem Stützkörper das zu verbindende flexible Rohr von innen abdichtet.

20. Fitting zum Verbinden mit einem starren Rohr für ein System nach einer der Ausführungsformen 1 bis 13,

- mit einem Grundkörper,
- mit einer mit dem Grundkörper verbundenen und eine Außenkontur bildenden Presshülse, wobei die Presshülse eine nach innen zum aufzunehmenden Rohr hin gerichtete Kammer aufweist,
- mit einem am distalen Ende der Presshülse ausgebildeten und über die Kammer hinausgehenden Hülsenabschnitt, wobei der Hülsenabschnitt einen Abschnitt der umzuformenden Außenkontur bildet, und
- mit einem in der Kammer angeordneten Dichtelement,
- wobei sich ein Innenabschnitt des Grundkörpers in Richtung des einzuschiebenden Rohres radial innerhalb der Kammer erstreckt,
- wobei ein Abschnitt des Dichtelements zwischen der Presshülse und dem Innenabschnitt des Grundkörpers angeordnet ist,
- wobei ein Abschnitt des Dichtelements zwischen der Presshülse und dem einzuschiebenden Rohr angeordnet ist,
- wobei die Presshülse zusammen mit dem Dichtelement das zu verbindende starre Rohr von außen abdichtet.

21. Fitting nach Ausführungsform 20,
dadurch gekennzeichnet,
dass der Hülsenabschnitt und/oder das Dichtelement nach innen ragende Nocken zur Führung und Halterung des Rohres aufweist.

22. Fitting zum Verbinden mit einem flexiblen Rohr für ein System nach einer der Ausführungsformen 1 bis 13,

- mit einem Grundkörper,
- mit einer mit dem Grundkörper verbundenen und eine Außenkontur bildenden Presshülse, wobei die Presshülse eine nach innen zum aufzunehmenden Rohr hin gerichtete Kammer aufweist,
- mit einem in der Kammer angeordneten Kraftübertragungsring und

- mit einem mit dem Grundkörper verbundenen und mit einer nach außen zum einzuschiebenden Rohr gerichteten Dichtkontur versehenen Stützkörper,
- wobei die Presshülse und der Stützkörper als separate Elemente mit dem Grundkörper verbunden sind und
- wobei Presshülse und der Kraftübertragungsring zueinander korrespondierende Sichtfenster aufweisen,
- wobei die Presshülse zusammen mit dem Kraftübertragungsring und dem Stützkörper das zu verbindende flexible Rohr von innen abdichtet.

23. Fitting nach Ausführungsform 22,
dadurch gekennzeichnet,
dass die Presshülse einen über die Kammer hinausgehenden Hülsenabschnitt aufweist, wobei der Hülsenabschnitt einen Abschnitt der durch eine Pressbacke umzuformenden Außenkontur bildet.

24. System zum Verbinden von starren Rohren und zum Verbinden von flexiblen Rohren

- mit einer Mehrzahl von ersten Fittings zum Verbinden mit einem starren Rohr, wobei die ersten Fittings als außen abdichtende Fittings ausgebildet sind und zu verbindende starre Rohre von außen abdichten, und
- mit einer Mehrzahl von zweiten Fittings zum Verbinden mit einem flexiblen Rohr, wobei die zweiten Fittings als innen abdichtende Fittings ausgebildet sind und zu verbindende flexible Rohr von innen abdichten,
- wobei die ersten Fittings zum Verbinden mit einem starren Rohr aufweisen

-- einen Grundkörper und
-- eine mit dem Grundkörper verbundene Presshülse,

- wobei die zweiten Fittings zum Verbinden mit einem flexiblen Rohr aufweisen

-- einen Grundkörper,
-- eine mit dem Grundkörper verbundene Presshülse und
-- einen mit dem Grundkörper verbundenen Stützkörper,

- wobei der Grundkörper des ersten Fittings zum Verbinden mit einem starren Rohr und der Grundkörper des zweiten Fittings zum Verbinden mit einem flexiblen Rohr einen gleichen Aufbau aufweisen.

25. System nach Ausführungsform 24,
dadurch gekennzeichnet,

- dass die ersten Fittings zum Verbinden mit einem starren Rohr nach einer der Ausführungsformen 19 oder 20 ausgebildet sind und
- dass die zweiten Fittings zum Verbinden mit einem flexiblen Rohr nach einer der Ausführungsformen 21 oder 22 ausgebildet sind.

Im Folgenden wird die Erfindung anhand von Ausführungsbeispielen mit Bezug auf die Zeichnung erläutert. In der Zeichnung zeigen

Fig. 1a-f    ein erstes System zum Verbinden von starren Rohren und zum Verbinden von flexiblen Rohren mit Angaben zur Bestimmung der Formeln,

Fig. 2a-f    ein zweites System zum Verbinden von starren Rohren und zum Verbinden von flexiblen Rohren mit Angaben zur Bestimmung der Formeln,

Fig. 3 a-r    Ausführungsbeispiele des Systems nach Fig. 1a-d und des Systems nach Fig. 2 a-d mit Angaben zur Bestimmung der Formeln,

Fig. 4a-e    ein Fitting zum Verbinden mit einem starren Rohr, insbesondere für ein System nach Fig. 1a bis 1f,

Fig. 5a-e    ein Fitting zum Verbinden mit einem flexiblem Rohr, insbesondere für ein System nach Fig. 1a bis 1f,

Fig. 6a-c    alternative Ausgestaltungen des in Fig. 5a bis 5e gezeigten Fittings,

Fig. 7a-d     ein Fitting zum Verbinden mit einem starren Rohr, insbesondere für ein System nach Fig. 2a bis 2f und

Fig. 8a-e     ein Fitting zum Verbinden mit einem flexiblem Rohr, insbesondere für ein System nach Fig. 2a bis 2f.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

Im Folgenden werden zunächst Ausführungsbeispiele für erfindungsgemäße Systeme zum Verbinden von starren Rohren und zum Verbinden von flexiblen Rohren erläutert. Die Details der einzelnen erfindungsgemäßen Fittings werden anschließend diskutiert.

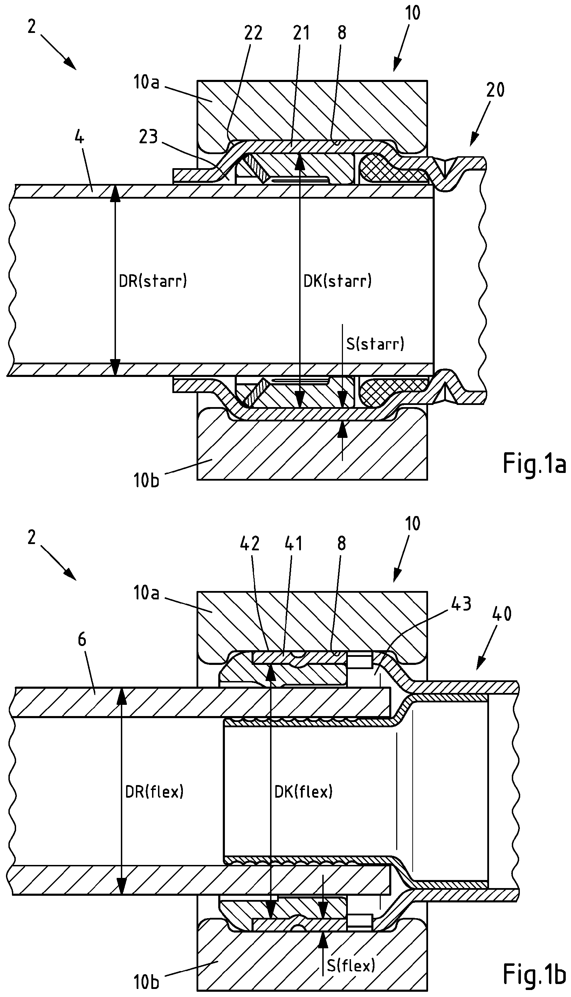

Fig. 1a und 1b zeigen ein erstes erfindungsgemäßes System 2 zum Verbinden von starren Rohren 4 und zum Verbinden von flexiblen Rohren 6, wobei die Rohre 4 und 6 zueinander korrespondierende Außendurchmesser aufweisen. Das System 2 weist eine eine Presskontur 8 aufweisende Pressbacke 10 mit einer oberen Pressbackenhälfte 10a und einer unteren Pressbackenhälfte 10b auf, die wie nachfolgend erläutert wird, für das Verpressen unterschiedlicher Fittings 20 und 40 geeignet ist.

Das System 2 weist gemäß Fig. 1a weiterhin mindestens ein erstes Fitting 20 zum Pressverbinden mit dem starren Rohr 4 auf, wobei das mindestens eine erste Fitting 20 eine erste Presshülse 21 aufweist, die mit einer ersten Außenkontur 22 versehen ist.

Das System 2 weist darüber hinaus gemäß Fig. 1b mindestens ein zweites Fitting 40 zum Pressverbinden mit einem flexiblen Rohr 6 auf, wobei das mindestens eine zweite Fitting 40 eine zweite Presshülse 41 mit einer zweiten Außenkontur 42 aufweist.

Erfindungsgemäß sind die Außenkontur 22 der ersten Presshülse 21 und die Außenkontur 42 der zweiten Presshülse 41 jeweils zumindest abschnittsweise an die Presskontur 8 der Pressbacke 10 angepasst und durch die Pressbacke 10 verpressbar.

In den Fig. 1a und 1b sind die genannten Komponenten in einer geschnitten Darstellung wiedergegeben, wobei eine obere Pressbackenhälfte 10a und eine untere Pressbackenhälfte 10b in Anlage an den Fittings 20 und 40 vor einem Verpressen gezeigt sind. Weitere Details der Pressbacke 10 und der beiden Fittings 20 und 40 werden im Zusammenhang mit den weiteren Figuren erläutert.

Somit kann erfindungsgemäß dieselbe Pressbacke 10 mit derselben Presskontur 8 eingesetzt werden, um sowohl das erste Fitting 20 für das Verbinden mit einem starren Rohr 4 als auch das zweite Fitting 40 für das Verbinden mit einem flexiblen Rohr 6 zu verpressen und dauerhaft abdichtend zu verbinden. Diese Eigenschaft gilt insbesondere für starre Rohre 4 und flexible Rohre 6 mit gleichen oder zumindest aufeinander angepassten Außendurchmessern.

Dadurch wird der Aufwand auf einer Baustelle verringert, da für das Verbinden von starren Rohren 4 und von flexiblen Rohren 6 gleicher Abmessungen dieselbe Pressbacke 10 mit derselben Presskontur 8 und mit demselben Presswerkzeug (nicht dargestellt) zum Erzeugen der notwendigen Presskraft eingesetzt werden. Während das Presswerkzeug vorzugsweise eine lineare Bewegung eines Stößels oder Kolbens erzeugt, werden mittels einer Einlaufkontur die beiden Pressbacken 10 aufeinander zu in eine geschlossene Stellung bewegt, so dass die Presshülsen 21 bzw. 41 radial nach innen verformt werden.

Daneben können die Pressbacken auch als Teile einer Pressschlinge ausgebildet sein, deren vorstehenden Enden mittels einer Pressvorrichtung zusammengedrückt werden, um somit die radial nach innen wirkende Verformung hervor zu rufen.

Wie in der Einleitung ausführlich erläutert worden ist, werden unter einem Fitting 20 bzw. 40 insbesondere eine gerade Verbindung verstanden. Ebenso sind Richtungswechsel in Form von Rohrbögen, Reduzierstücke, Abzweige wie T-Stücke oder Kreuzungen mit zwei oder mehr Pressabschnitten möglich. Des Weiteren kann ein Fitting bzw. ein Rohranschluss einer Armatur mit nur einem Pressabschnitt sein.

Dadurch, dass die Außenkontur 22 der ersten Presshülse 21 und die Außenkontur 42 der zweiten Presshülse 41 jeweils zumindest abschnittsweise an die Presskontur 8 der Pressbacke 10 angepasst sind, kommt es beim Zusammenfahren der Pressbacken 10 zu einer zunehmenden zumindest abschnittsweisen flächigen Anlage der Presskontur 8 einerseits und zumindest einem Abschnitt der Außenkontur 22 der ersten Presshülse 21 bzw. der Außenkontur 42 der zweiten Presshülse 41 andererseits. Durch das Zusammenfahren der Pressbacken 10 bis zu einer vorgegebenen Endstellung werden die Presshülsen 21 und 41 vollständig verpresst und verformt. Dabei werden die Presshülsen 21 und 41 in den geometrisch übereinstimmenden Abschnitten in gleicher Weise durch die Pressbacke 10 umgeformt. Der erfindungsgemäße Effekt, dass eine Pressbacke 10 für zwei unterschiedliche Presshülsen 21 und 41 zweier Fittings 20 und 40 geeignet ist, wird somit erreicht. Insbesondere können die Presshülsen 21 und 41 weitgehend gleich ausgebildet sein.

Aus der Fig. 1a und 1b sind darüber hinaus die Abmessungen verschiedener Größen zur Charakterisierung der Geometrien der Fittings 20, 40 für starre Rohre 4 und für flexible 6 Rohre in Verbindung mit der Geometrie der Pressbacke 10 vor dem Verpressen dargestellt.

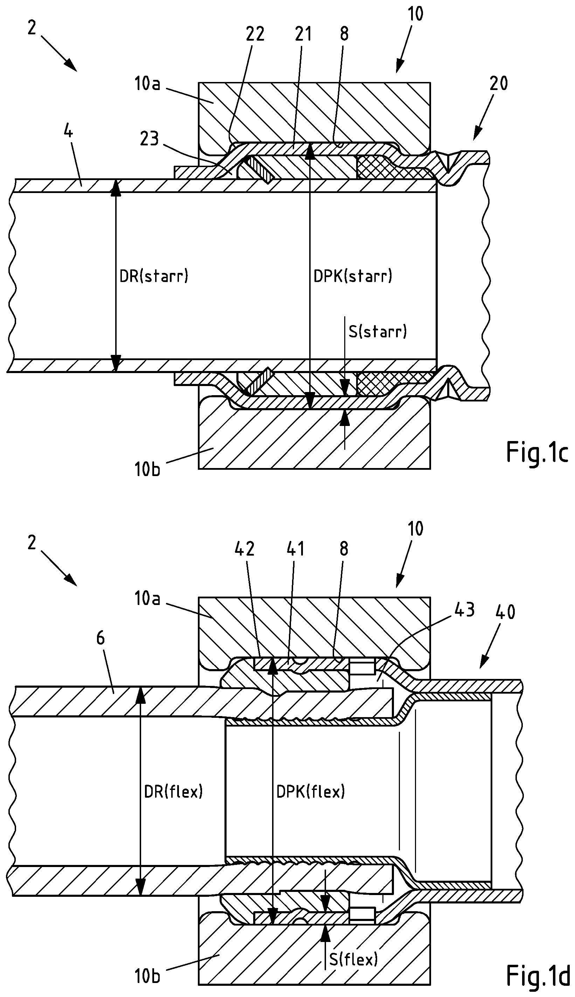

Fig. 1c und 1d zeigen das in den Fig. 1a und 1b gezeigte System 2 zum Verbinden von starren Rohren 4 und zum Verbinden von flexiblen Rohren 6 in einem verpressten Zustand. Die Abmessungen verschiedener Größen zur Charakterisierung der Geometrien der Fittings 20, 40 für starre Rohre 4 und für flexible Rohre 6 in Verbindung mit der Geometrie der Pressbacke 10 sind nach dem Verpressen dargestellt.

Die Fig. 1a zeigt, jeweils in einem Zustand vor dem Verpressen, den Innendurchmesser DK(starr) der Kammer 23 der Presshülse 21, die Wanddicke s(starr) der Presshülse 21 im zu verpressenden Bereich des Fittings 20 und den Außendurchmesser DR(starr) des aufzunehmenden starren Rohrs 4.

In der Fig. 1c ist der Innendurchmesser DPK(starr) der Presskontur 8 der Pressbacke 10 im zu verpressenden Bereich des ersten Fittings 20 nach dem Verpressen eingezeichnet.

Aus den in Fig. 1a und 1c eingezeichneten Abmessungen ergibt sich der Verpressungsgrad β(starr), welcher gegeben ist durch

$$\beta(starr) = \frac{DK(starr)+2s(starr)-DPK(starr)}{DR(starr)}.$$

Der Verpressungsgrad β(starr) nimmt vorzugsweise Werte mit β(starr)<1,5 an. Für einen solchen Verpressungsgrad kann gewährleistet werden, dass eine dichte Verbindung mit hoher Auszugsfestigkeit erreicht wird und die Faltenbildung des zu verbindenden Rohres und des Fittings beim Verpressen minimiert wird. Bevorzugt für eine dichte Verbindung mit hoher Auszugsfestigkeit ist ein Verpressungsgrad β(starr), der Werte mit β(starr)<0,12, besonders bevorzugt β(starr)<0,10, annimmt.

Bei einem Verpressungsgrad β(starr) von 0, entsprechend einem Verpressungsgrad von 0 %, erfolgt kein abdichtendes Verpressen des Fittings mit dem zu verbindenden Rohr. Bei einem Verpressungsgrad von 0,15 oder größer, entsprechend einem Verpressungsgrad von 15 % oder darüber, wird das zu verpressende Fitting bzw. das zu verpressende Rohr zu stark verformt, so dass es zu einer Faltenbildung des zu verpressenden Materials kommt und die zu hohen Presskräfte zur Deformation des zu verpressenden Fittings und des Rohrs führen.

Die Fig. 1b zeigt, jeweils in einem Zustand vor dem Verpressen, den Innendurchmesser DK(flex) der Kammer 43 der Presshülse 41, die Wanddicke s(flex) der Presshülse 41 im zu verpressenden Bereich des Fittings 40 und den Außendurchmesser DR(flex) des aufzunehmenden flexiblen Rohrs 6.

In der Fig. 1d ist der Innendurchmesser DPK(flex) der Presskontur 8 der Pressbacke 10 im zu verpressenden Bereich des zweiten Fittings 40 nach dem Verpressen angegeben.

Aus den in Fig. 1b und Fig. 1d dargestellten Abmessungen ergibt sich der Verpressungsgrad β(flex), welcher gegeben ist durch

$$\beta(flex) = \frac{DK(flex)+2s(flex)-DPK(flex)}{DR(flex)}.$$

Der Verpressungsgrad β(flex) nimmt vorzugsweise Werte mit β(flex)<0,15 an. Für einen solchen Verpressungsgrad kann gewährleistet werden, dass eine dichte Verbindung mit hoher Auszugsfestigkeit erreicht wird und die Faltenbildung des zu verbindenden Rohrs und des Fittings beim Verpressen minimiert werden. Bevorzugt für eine dichte Verbindung mit hoher Auszugsfestigkeit ist ein Verpressungsgrad β(flex), der Werte mit β(flex)<0,12, besonders bevorzugt β(flex)<0,10 annimmt.

Bei einem Verpressungsgrad β(flex) von 0, entsprechend einem Verpressungsgrad von 0 %, erfolgt kein abdichtendes Verpressen des Fittings mit dem zu verbindenden Rohr. Weiter hat sich gezeigt, dass bei einem Verpressungsgrad von 0,15 oder höher, entsprechend einem Verpressungsgrad von 15 % oder mehr, das zu verpressende Fitting bzw. das zu verpressende Rohr zu stark verformt wird, so dass es zu einer Faltenbildung des zu verpressenden Materials kommt und die zu hohen Presskräfte zu Deformationen des zu verpressenden Fittings und des Rohrs führen.

In Zusammenschau der Fig. 1a, 1b, 1c und 1d ergibt sich aus den Abmessungen das Verhältnis τ der Verpressungsgrade β(starr) und β(flex), wobei τ gegeben ist durch

$$\tau = \frac{\beta(starr)}{\beta(flex)} = \frac{DK(starr)+2s(starr)-DPK(starr)}{DK(flex)+2s(flex)-DPK(flex)} \frac{DR(flex)}{DR(starr)}.$$

Das Verhältnis τ nimmt vorzugsweise Werte aus einem Wertebereich [0,50; 1,50] an. Für ein solches Verhältnis τ kann ein möglichst gleicher Verpressungsgrad der Verpressung des Fittings zur Verbindung eines starren Rohrs 4 und der Verpressung des Fittings zur Verbindung eines flexiblen Rohrs 6 gewährleistet werden, so dass bei beiden Verpressvorgängen mit demselben Presswerkezeug ein Verpressen eine dichte Verbindung von Fitting und zu verbindendem Rohr erreicht werden kann.

Auf diese Weise kann bei einer optimalen Verpressung eines Fittings mit einem starren Rohr 4 ein Kollabieren oder eine zu geringe Verpressung eines Fittings mit einem flexiblen Rohr 6 bei Verpressung mit demselben Presswerkzeug, der Pressbacke 10, verhindert werden. Zugleich kann bei einer optimalen Verpressung eines Fittings mit einem flexiblen Rohr 6 ein Kollabieren oder eine zu geringe Verpressung eines Fittings mit einem starren Rohr 4 bei Verpressung mit demselben Presswerkzeug verhindert werden. Bevorzugt für eine optimale Verpressung sowohl für das Verbinden eines starren als auch eines flexiblen Rohres ist ein Verhältnis $\tau$, welches Werte aus dem Wertebereich [0,75; 1,25], besonders bevorzugt [0,80; 1,20], annimmt.

Es hat sich gezeigt, dass bei einem Verhältnis $\tau$ mit $\tau<0,5$ bei optimaler Verpressung eines Fittings mit einem starren Rohr 4 das Fitting zur Verbindung mit einem flexiblen Rohr 6 bei Verpressung mit demselben Presswerkzeug zu stark verpresst wird, wodurch es zu einer Faltenbildung und einem Kollabieren des flexiblen Rohrs 6 kommt. Dagegen führt für ein Verhältnis $\tau>1,5$ bei optimaler Verpressung eines Fittings mit einem starren Rohr 4 zu einer zu geringen Verpressung des Fittings mit einem flexiblen Rohr 6 bei Verpressung mit demselben Presswerkzeug. Solch eine zu geringe Verpressung resultiert regelmäßig in einer Undichtigkeit der Verbindung des Fittings mit einem flexiblen Rohr 6 und einer zu geringen Auszugsfestigkeit.

Weiterhin wird bei einem Verhältnis $\tau$ mit $\tau>1,5$ bei optimaler Verpressung eines Fittings mit einem flexiblen Rohr 6 das Fitting zur Verbindung mit einem starren Rohr 4 bei Verpressung mit demselben Presswerkzeug zu stark verpresst, wodurch es zu einer Faltenbildung und einem Kollabieren des starren Rohrs 4 kommt. Darüber hinaus kann ein zu starkes Verpressen des Fittings zur Verbindung mit einem starren Rohr 4 eine Beschädigung des Dichtelements und/oder weiterer Elemente innerhalb der Kammer 23 der Presshülse 21 hervorrufen. Dagegen führt ein Verhältnis $\tau<0,5$ bei optimaler Verpressung eines Fittings mit einem flexiblen Rohr 6 zu einer zu geringen Verpressung des Fittings mit einem starren Rohr 4 bei Verpressung mit demselben Presswerkzeug. Solch eine zu geringe Verpressung resultiert regelmäßig in einer Undichtigkeit der Verbindung des Fittings mit einem starren Rohr 4 und einer zu geringen Auszugsfestigkeit.

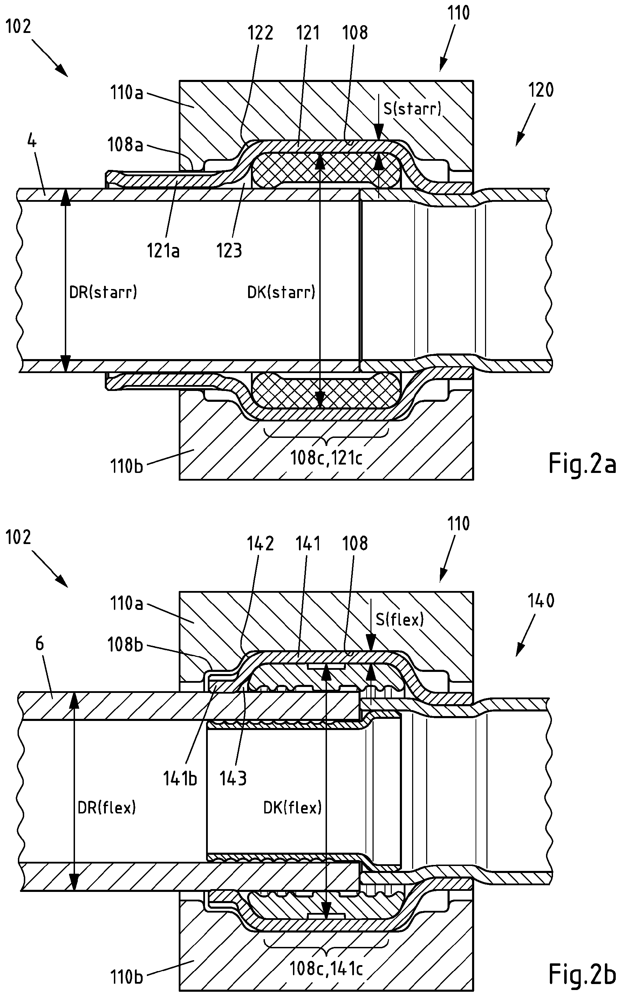

Fig. 2a und 2b zeigen ein zweites erfindungsgemäßes System 102 zum Verbinden von starren Rohren 4 und zum Verbinden von flexiblen Rohren 6, wobei die Rohre 4 und 6 zueinander korrespondierende Außendurchmesser aufweisen. Das System 102 weist eine eine Presskontur 108 aufweisende Pressbackenhälfte 110a einer Pressbacke 110 auf, die, wie nachfolgend erläutert wird, für das Verpressen unterschiedlicher Fittings 120 und 140 geeignet ist.

Das System 102 weist mindestens ein erstes Fitting 120 zum Pressverbinden mit dem starren Rohr 4 auf, wobei das mindestens eine erste Fitting 120 eine erste Presshülse 121 aufweist, die mit einer ersten Außenkontur 122 versehen ist.

Das System 102 weist darüber hinaus mindestens ein zweites Fitting 140 zum Pressverbinden mit einem flexiblen Rohr 6 auf, wobei das mindestens eine zweite Fitting 140 eine zweite Presshülse 141 mit einer zweiten Außenkontur 142 aufweist.

Erfindungsgemäß sind die Außenkontur 122 der ersten Presshülse 121 und die Außenkontur 142 der zweiten Presshülse 141 jeweils zumindest abschnittsweise an die Presskontur 108 der Pressbacke 110 angepasst und durch die Pressbacke 110 verpressbar.

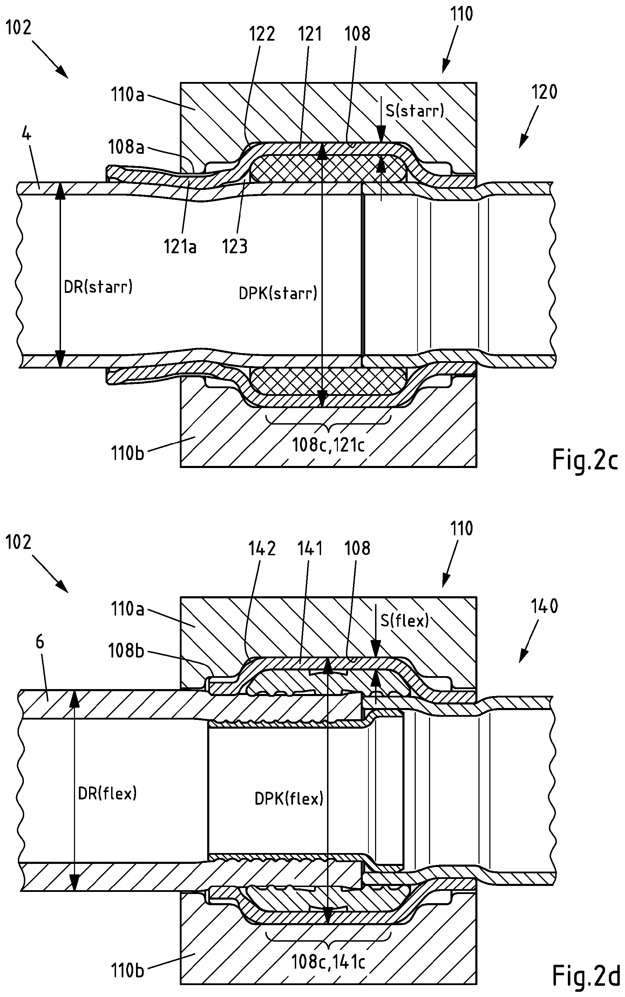

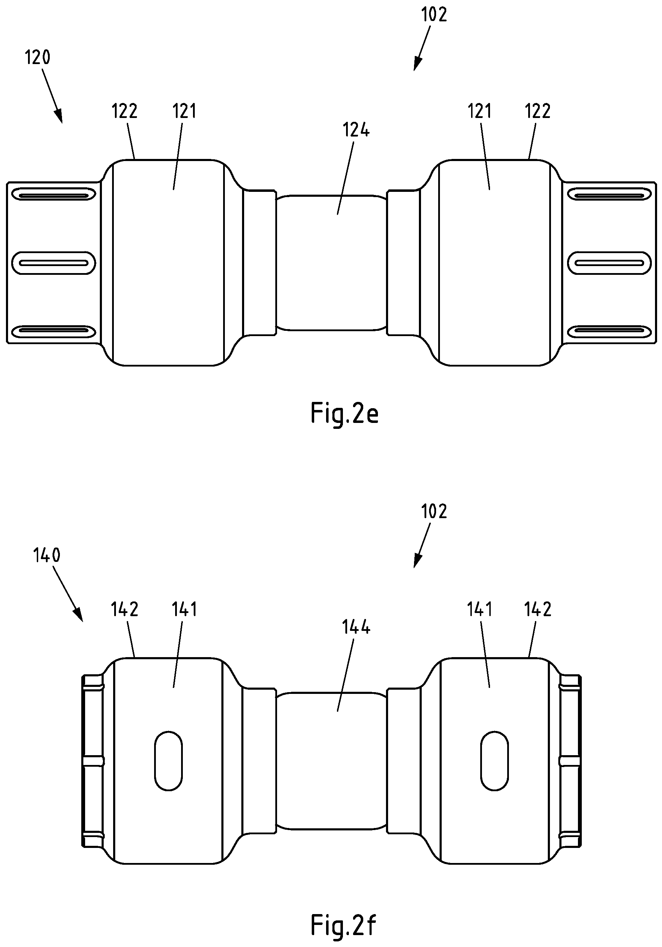

Im Unterschied zu dem ersten System 2 weisen beim System 102 die erste Presshülse 121 einen ersten zusätzlichen Pressabschnitt 121a und die zweite Presshülse 141 einen zweiten zusätzlichen Pressabschnitt 141b auf. Wie in Fig. 2 zu erkennen ist, weisen der erste zusätzliche Pressabschnitt 121a und der zweite zusätzliche Pressabschnitt 141b voneinander abweichende Außenkonturen auf, die jeweils abschnittsweise durch die Pressbacke 110 und deren Presskontur 108 mit korrespondierenden Abschnitten 108a und 108b umformbar sind. Somit ist es möglich, mit der gleichen Pressbacke 110 für starre Rohre 4 und flexible Rohre 6 verschiedene Funktionalitäten in die Presshülsen 121 und 141 einzuformen. Da zudem die Presshülsen 121 und 141 übereinstimmende Pressabschnitte 121c und 141c aufweisen, werden diese durch den gleichen Abschnitt 108c der Presskontur 108 der Pressbacke 110 beim Verpressen in gleicher Weise verformt.

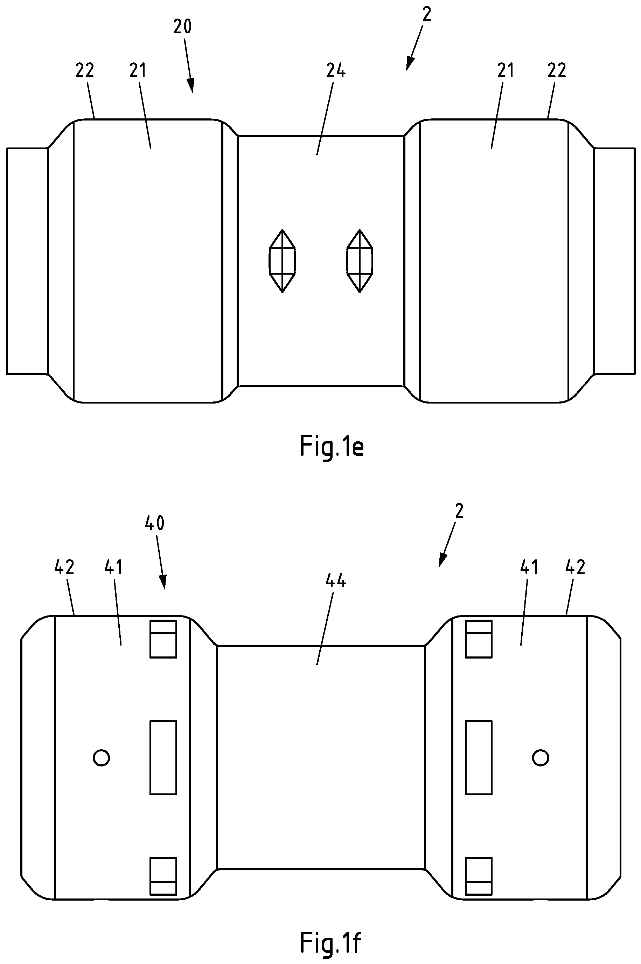

Die Fig. 1e und 1f zeigen beide Fittings 20 und 40 in einer seitlichen Darstellung. Die Außenkonturen 22 und 42 der beiden Presshülsen 21 und 41 stimmen überein, so dass dieselbe Pressbacke 10 für das Verpressen der Presshülsen 21 und 41 eingesetzt werden kann. Die gleichen Übereinstimmungen der Presshülsen 121 und 141 zeigen die entsprechenden Fig. 2e und 2f für die Fittings 120 und 140.

Wie in den Fig. 1a bis 2f dargestellt ist, weisen die Presshülsen 22, 122 sowie 42, 142 jeweils eine zum aufzunehmenden Rohr 4 bzw. 6 nach innen hin gerichtete Kammer 23, 123 sowie 43, 143 zur Aufnahme von weiteren für das Verpressen und Abdichten der Verbindung erforderlichen Funktionselementen auf, deren jeweils unterschiedlich ausgebildeten Formen und Funktionsweisen im Zusammenhang mit den weiteren Figuren erläutert wird. Die an sich gleich oder ähnlich ausgebildeten Kammern 23, 123 bzw. 42, 142 nehmen daher jeweils unterschiedliche Funktionselemente auf.

In Analogie zu den Fig. 1a und 1b sind in den Figuren 2a und 2b die Abmessungen verschiedener Größen zur Charakterisierung der Geometrien der Fittings 120, 140 für starre Rohre 4 und für flexible 6 Rohre in Verbindung mit der Geometrie der Pressbacke 10 vor dem Verpressen dargestellt.

Weiter zeigen Fig. 2c und 2d in Analogie zu den Fig. 1c und 1d das in den Fig. 2a und 2d gezeigte System 102 zum Verbinden von starren Rohren 4 und zum Verbinden von flexiblen Rohren 6 in einem verpressten Zustand. Die Abmessungen verschiedener Größen zur Charakterisierung der Geometrien der Fittings 120, 140 für starre Rohre 4 und für flexible Rohre 6 in Verbindung mit der Geometrie der Pressbacke 110 sind nach dem Verpressen dargestellt.

Die Fig. 2a zeigt, jeweils in einem Zustand vor dem Verpressen, den Innendurchmesser DK(starr) der Kammer 123 der Presshülse 121, die Wanddicke s(starr) der Presshülse 121 im zu verpressenden Bereich des Fittings 120 und den Durchmesser DR(starr) des aufzunehmenden starren Rohrs 4.

In der Fig. 2c ist der Innendurchmesser DPK(starr) der Presskontur 108 der Pressbacke 110 im zu verpressenden Bereich des ersten Fittings 120 nach dem Verpressen angegeben.

Aus den in Fig. 2a und 2c angegebenen Abmessungen ergibt sich der bereits in Bezug auf Fig. 1 beschriebene Verpressungsgrad β(starr), welcher gegeben ist durch

$$\beta(starr) = \frac{DK(starr) + 2s(starr) - DPK(starr)}{DR(starr)}.$$

Die Fig. 2b zeigt, jeweils in einem Zustand vor dem Verpressen, den Innendurchmesser DK(flex) der Kammer 143 der Presshülse 141, die Wanddicke s(flex) der Presshülse 141 im zu verpressenden Bereich des Fittings 140 und den Durchmesser DR(flex) des aufzunehmenden flexiblen Rohrs 6.

In der Fig. 2d ist der Innendurchmesser DPK(flex) der Presskontur 108 der Pressbacke 110 im zu verpressenden Bereich des zweiten Fittings 140 nach dem Verpressen angegeben.

Aus den in Fig. 2b und Fig. 2d dargestellten Abmessungen ergibt sich der bereits in Bezug auf Fig. 1 beschriebene Verpressungsgrad β(flex), welcher gegeben ist durch

$$\beta(flex) = \frac{DK(flex) + 2s(flex) - DPK(flex)}{DR(flex)}.$$

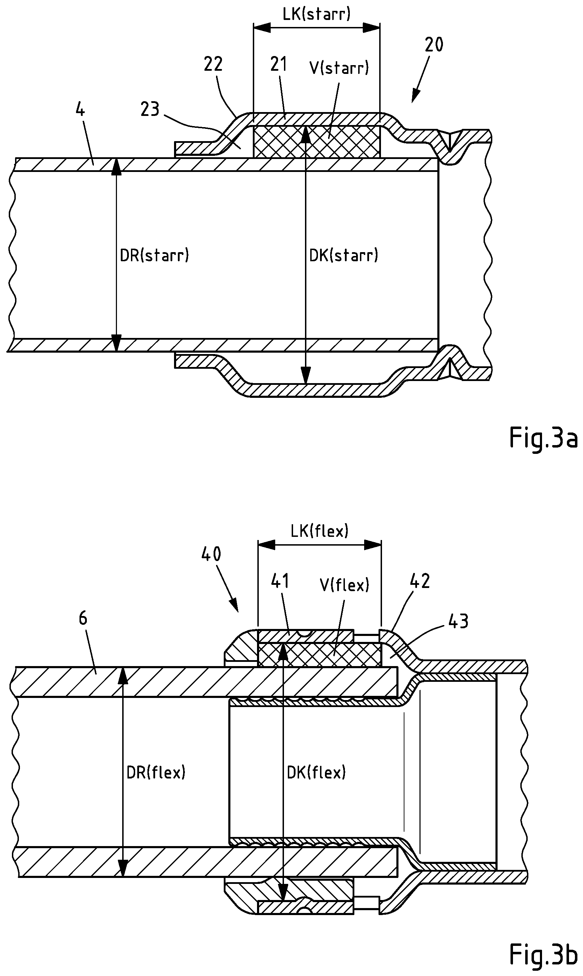

Die Fig. 3a bis 3i zeigen Ausführungsbeispiele des ersten erfindungsgemäßes System 2 gemäß der Fig. 1 zur Bestimmung verschiedener Größen zur Charakterisierung der Geometrien der Fittings für starre Rohre und für flexible Rohre. Die Fittings sind dabei nur mit Presshülse 21 bzw. 41 und eingestecktem Rohr 4 bzw. 6, jedoch ohne die für das Verpressen erforderlichen Elemente innerhalb des Fittings dargestellt. Denn im Folgenden werden die Größen anhand der Abmessungen der Kammern 23 bzw. 43 wie Höhe, Länge und Volumen bestimmt.

In Fig. 3a ist zunächst ein erstes Fitting 20 zum Verpressen eines starren Rohres 4 mit einer eine nach innen gerichtete Kammer 23 aufweisenden Presshülse 21 gezeigt. Wie in Fig. 3a ersichtlich, ist die Kammerlänge LK(starr) definiert als Länge des Abschnitts der Kammer 23, bei dem die Außenkontur 22 der Kammer 23 im Wesentlichen planparallel zu der Außenhülle des von dem Fitting 20 umgebenen starren Rohres 4 verläuft. Folglich ist LK(starr) als Länge des Abschnitts definiert, der zwischen den zum Rohr 4 hin gekrümmten Abschnitten der Außenkontur 22 der Kammer 23 liegt.

Weiter ist ersichtlich, dass der Innendurchmesser DK(starr) der Kammer 23 definiert ist ohne Hinzunahme der Wanddicke der Kammer 23, wogegen der Außendurchmesser DR(starr) des aufzunehmenden starren Rohres 4 definiert ist unter Hinzunahme der Wanddicke des Rohres 4. Somit ist durch die Differenz DK(starr)-DR(starr) die Höhe der Kammer 23 gegeben. Daraus ergibt sich ein Kammervolumen

$$V(starr) = \frac{\pi \cdot LK(starr)}{4} \cdot (DK(starr)^2 - DR(starr)^2).$$

In Fig. 3b ist ein zweites Fitting 40 zum Verpressen eines flexiblen Rohres 6 mit einer eine nach innen gerichtete Kammer 43 aufweisenden Presshülse 41 gezeigt. Analog zur Fig. 3a, ist in Fig. 3b ersichtlich, dass die Kammerlänge LK(flex) definiert ist als Länge des Abschnitts der Kammer 43, bei dem die Außenkontur 42 der Kammer 43 im Wesentlichen planparallel zu der Außenhülle des von dem Fitting 40 umgebenen flexiblen Rohres 6 verläuft. Folglich ist LK(flex) als Länge des Abschnitts definiert, der zwischen den zum Rohr 6 hin gekrümmten Abschnitten der Außenkontur 42 der Kammer 43 liegt.

Weiter ist ersichtlich, dass der Innendurchmesser DK(flex) der Kammer 43 definiert ist ohne Hinzunahme der Wanddicke der Kammer 43, wogegen der Außendurchmesser DR(flex) des aufzunehmenden flexiblen Rohres 6 definiert ist unter Hinzunahme der Wanddicke s(flex) des Rohres 6. Somit ist durch die Differenz DK(flex)-DR(flex) die Höhe der Kammer 43 gegeben. Daraus ergibt ein Kammervolumen

$$V(flex) = \frac{\pi \cdot LK(flex)}{4} \cdot (DK(flex)^2 - DR(flex)^2).$$

Aus diesen Kammervolumina kann das Verhältnis

$$\delta = \frac{V(starr)}{V(flex)}$$

gebildet werden.

Aus den genannten Abmessungen gemäß den Fig. 3a und 3b können auch die Verhältnisse $\varepsilon$(starr) und $\varepsilon$(flex) der Kammerhöhe und Kammerlänge gebildet werden.

$\varepsilon$(starr) ist dabei definiert durch

$$\varepsilon(starr) = \frac{DK(starr) - DR(starr)}{2 \cdot LK(starr)}.$$

$\varepsilon$(flex) ist definiert durch

$$\varepsilon(flex) = \frac{DK(flex) - DR(flex)}{2 \cdot LK(flex)}.$$

Darüber hinaus kann auch das Verhältnis $\alpha$ berechnet werden durch

$$\alpha = \frac{\varepsilon(starr)}{\varepsilon(flex)} = \frac{LK(flex)}{LK(starr)} \cdot \frac{(DK(starr) - DR(starr))}{(DK(flex) - DR(flex))}.$$

wobei $\alpha$ Werte aus einem Wertebereich [0,50; 3,00], bevorzugt [0,50; 1,50], besonders bevorzugt [0,75; 1,25] annimmt.

Somit gibt $\alpha$ das Verhältnis des Verhältnisses aus Kammerhöhe ((DK(starr)-DR(flex)/2) und Kammerlänge DK(starr) der Presshülse 21 eines Fittings 20 zum Verpressen von starren Rohren 4 und aus Kammerhöhe ((DK(starr)-DR(flex)/2) und -länge DK(starr) der Presshülse 41 eines Fittings 40 zum Verpressen von flexiblen Rohren 6 an.

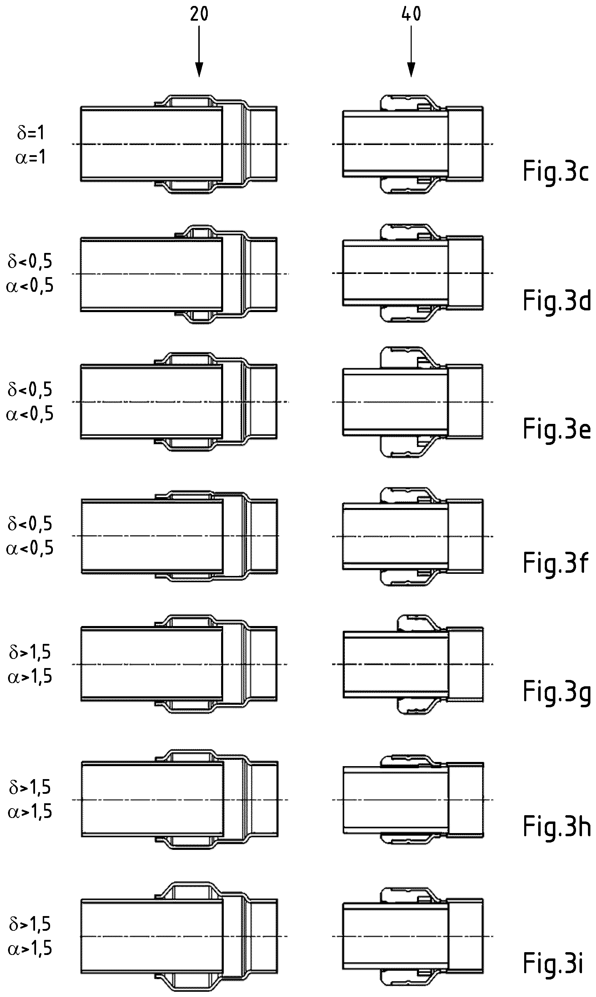

Fig. 3c bis 3i zeigen nun jeweils ein Paar gebildet aus einem in Fig. 3a gezeigten erstem Fitting 20 und einem in Fig. 3b gezeigtem zweiten Fitting 40, wobei sich durch die variierenden Abmessungen der Fittings 20 und 40 verschiedene Werte für das Verhältnis der Kammervolumina bzw. für das Verhältnis der Verhältnisse von Kammerhöhe zu Kammerlänge der Kammern 23, und 43 ergeben, wobei beide Verhältnisse durch $\delta$ angegeben werden.

Bei einem Verhältnis von $\delta=1$ bzw. $\alpha=1$ gemäß Fig. 3c bietet der Innenraum der Kammern 23, 43 ausreichend Platz für die von der Kammer 23, 43 aufzunehmenden Elemente, beispielsweise einen O-Ring oder einen Krallring. Außerdem kann so ein optimaler Verpressungsgrad sowohl für das erste Fitting 20 als auch für das zweite Fitting 40 gewährleistet werden.

In Fig. 3d bis Fig. 3f sind Beispiele für Abmessungen resultierend in einem Verhältnis von $\delta<0,5$ bzw. $\alpha<0,5$ gezeigt. Durch solch gewählte Abmessungen ergibt sich entweder eine zu kurze Kammerlänge der Kammer 23 des ersten Fittings 20, wie in Fig. 3d gezeigt, oder eine zu geringe Kammerhöhe der Kammer 23, wie in Fig. 3f gezeigt, so dass kein Platz für von der Kammer 23 aufzunehmende Elemente verbleibt, oder eine zu hohe Kammerhöhe der Kammer 43 des zweiten Fittings 40 resultierend in einem zu hohen Verpressungsgrad, wie in Fig. 3e gezeigt.

In Fig. 3g bis Fig. 3i sind Beispiele für Abmessungen resultierend in einem Verhältnis von $\delta>1,5$ bzw. $\alpha>1,5$ gezeigt. Durch solch gewählte Abmessungen ergibt sich entweder eine zu kurze Kammerlänge der Kammer 43 des zweiten Fittings 40, wie in Fig. 3g gezeigt, oder eine zu geringe Kammerhöhe der Kammer 43 des zweiten Fittings 40, wie in Fig. 3h gezeigt, so dass kein Platz für von der Kammer 43 aufzunehmende Elemente verbleibt, oder eine zu hohe Kammerhöhe der Kammer 23 des ersten Fittings 20 resultierend in einem zu hohen Verpressungsgrad, wie in Fig. 3i gezeigt.

Bei anderen Ausgestaltungen der Fittings können auch die Grenzwerte $0,5<=\delta<=3,00$ bzw. $0,5<=\alpha<=3,00$ Anwendung finden.

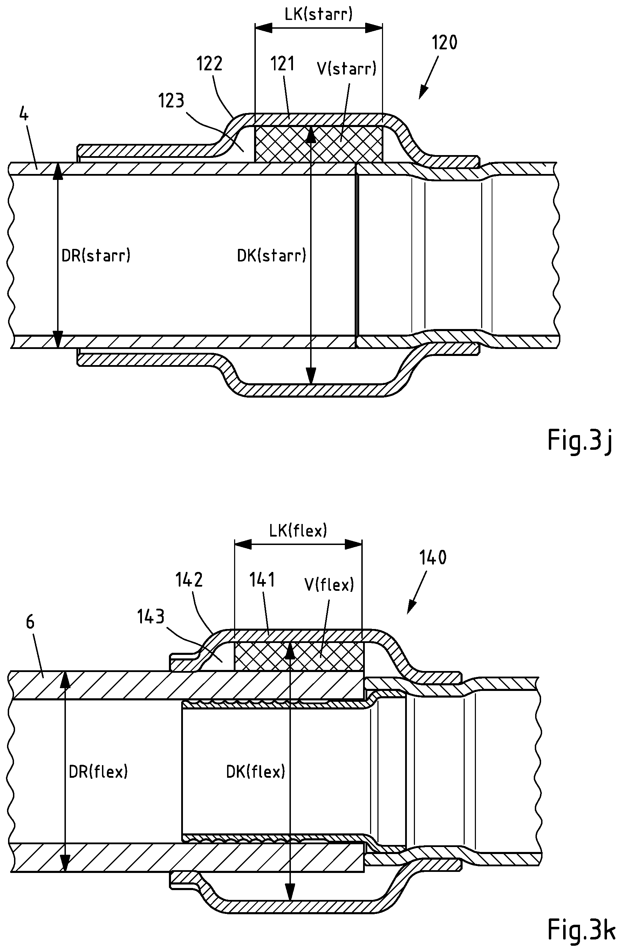

Die Fig. 3j und 3k zeigen Ausführungsbeispiele des zweiten erfindungsgemäßen Systems 102 mit den Fittings 120 und 140.

In Fig. 3j ist zunächst ein erstes Fitting 120 zum Verpressen eines starren Rohres 4 mit einer eine nach innen gerichtete Kammer 123 aufweisenden Presshülse 121 gezeigt. Wie in Fig. 3j ersichtlich, ist die Kammerlänge LK(starr) definiert als Länge des Abschnitts der Kammer 123, bei dem die Außenkontur 122 der Kammer 123 im Wesentlichen planparallel zu der Außenhülle des von dem Fitting 120 umgebenen starren Rohres 4 verläuft. Folglich ist LK(starr) als Länge des Abschnitts definiert, der zwischen den zum Rohr 4 hin gekrümmten Abschnitten der Außenkontur 122 der Kammer 123 liegt. Weiter ist ersichtlich, dass der Kammerdurchmesser DK(starr) definiert ist ohne Hinzunahme der Wanddicke der Kammer 123, wogegen DR(starr), der Durchmesser des aufzunehmenden starren Rohres 4, definiert ist unter Hinzunahme der Wanddicke des Rohres 4. Somit ist durch die Differenz DK(starr)-DR(starr) die Höhe der Kammer 123 gegeben.

In Fig. 3k ist ein zweites Fitting 140 zum Verpressen eines flexiblen Rohres 6 mit einer eine nach innen gerichtete Kammer 143 aufweisenden Presshülse 141 gezeigt. Analog zur Fig. 3j, ist in Fig. 3k ersichtlich, dass die Kammerlänge LK(flex) definiert als Länge des Abschnitts der Kammer 143, bei dem die Außenkontur 142 der Kammer 143 im Wesentlichen planparallel zu der Außenhülle des von dem Fitting 140 umgebenen flexiblen Rohres 6 verläuft. Folglich ist LK(flex) als Länge des Abschnitts definiert, der zwischen den zum Rohr 6 hin gekrümmten Abschnitten der Außenkontur 142 der Kammer 143 liegt. Weiter ist ersichtlich, dass der Kammerdurchmesser DK(flex) definiert ist ohne Hinzunahme der Wanddicke der Kammer 143, wogegen DR(flex), der Durchmesser des aufzunehmenden flexiblen Rohres 6, definiert ist unter Hinzunahme der Wanddicke s(flex) des Rohres 6. Somit ist durch die Differenz DK(flex)-DK(flex) die Höhe der Kammer 143 gegeben.

Für die Fittings 120 und 140 ergeben sich aus diesen Definitionen die Kammervolumina

$$V(starr) = \frac{\pi \cdot LK(starr)}{4} \cdot (DK(starr)^2 - DR(starr)^2).$$

und

$$V(flex) = \frac{\pi \cdot LK(flex)}{4} \cdot (DK(flex)^2 - DR(flex)^2),$$

sowie deren Verhältnis

$$\delta = \frac{V(starr)}{V(flex)}.$$

Ebenso ist $\alpha$ gegeben durch $\alpha = \frac{\varepsilon(starr)}{\varepsilon(flex)}$ und gibt das Verhältnis des Verhältnisses aus Kammerhöhe ((DK(starr)-DR(flex)/2) und Kammerlänge DK(starr) der Presshülse 121 eines Fittings 120 zum Verpressen von starren Rohren 4 und aus Kammerhöhe ((DK(starr)-DR(flex)/2) und -länge DK(starr) der Presshülse 141 eines Fittings 140 zum Verpressen von flexiblen Rohren 6 an.

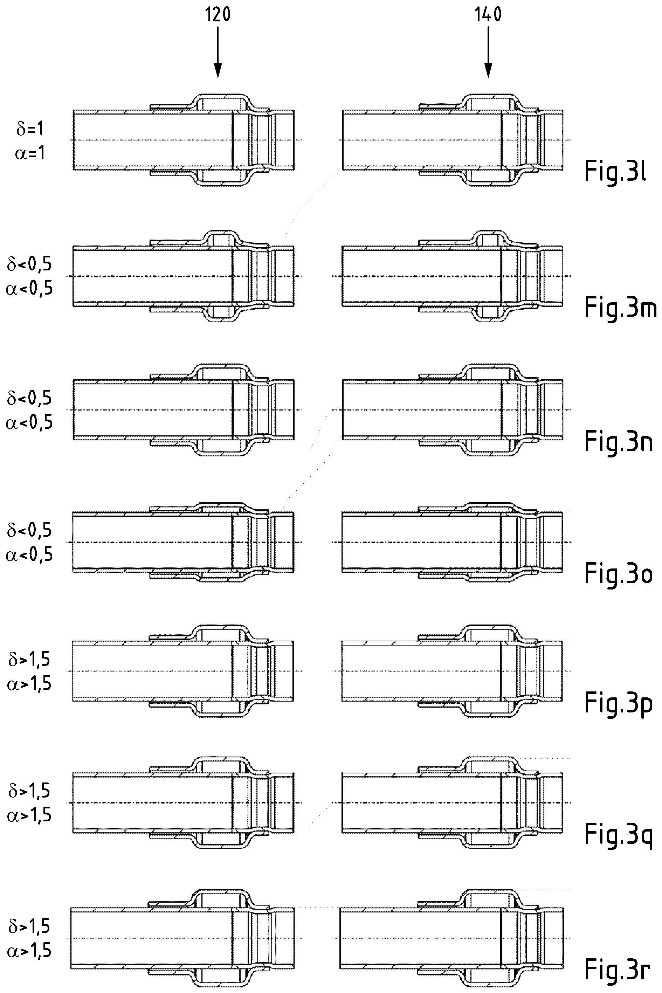

Fig. 3l bis Fig.3r zeigen nun jeweils ein Paar gebildet aus einem in Fig. 3j gezeigten erstem Fitting 120 und einem in Fig. 3k gezeigtem zweiten Fitting 140, wobei sich durch die variierenden Abmessungen verschiedene Werte für das Verhältnis der Kammervolumina bzw. für das Verhältnis der Verhältnisse von Kammerhöhe zu Kammerlänge ergeben, wobei beide Verhältnisse durch $\delta$ bzw. $\alpha$ angegeben werden.

Bei einem Verhältnis von $\delta=1$ bzw. $\alpha=1$ wie in Fig. 3l gezeigt, bietet der Innenraum der Kammern 123, 143 ausreichend Platz für die von der Kammer 123, 143 aufzunehmenden Elemente, beispielsweise ein Dichtelement. Außerdem kann so ein optimaler Verpressungsgrad sowohl für das erste Fitting 120 als auch für das zweite Fitting 140 gewährleistet werden.

In Fig. 3m bis Fig. 3o sind Beispiele für Abmessungen resultierend in einem Verhältnis von $\delta<0{,}5$ bzw. $\alpha<0{,}5$ gezeigt. Durch solch gewählte Abmessungen ergibt sich entweder eine zu kurze Kammerlänge der Kammer 123 des ersten Fittings 120, wie in Fig. 3m gezeigt, oder eine zu geringe Kammerhöhe der Kammer 123, wie in Fig. 3o gezeigt, so dass kein Platz für von der Kammer 123 aufzunehmende Elemente verbleibt, oder eine zu hohe Kammerhöhe der Kammer 143 des zweiten Fittings 140 resultierend in einem zu hohen Verpressungsgrad, wie in Fig. 3n gezeigt.

In Fig. 3p bis Fig. 3r sind Beispiele für Abmessungen resultierend in einem Verhältnis von $\delta>1{,}5$ bzw. $\alpha>1{,}5$ gezeigt. Durch solch gewählte Abmessungen ergibt sich entweder eine zu kurze Kammerlänge der Kammer 143 des zweiten Fittings 140, wie in Fig. 3p gezeigt, oder eine zu geringe Kammerhöhe der Kammer 143 des zweiten Fittings 140, wie in Fig. 3q gezeigt, so dass kein Platz für von der Kammer 143 aufzunehmende Elemente verbleibt, oder eine zu hohe Kammerhöhe der Kammer 123 des ersten Fittings 120 resultierend in einem zu hohen Verpressungsgrad, wie in Fig. 3r gezeigt.

Bei anderen Ausgestaltungen der Fittings können auch die Grenzwerte $0{,}5<=\delta<=3{,}00$ bzw. $0{,}5<=\alpha<=3{,}00$ Anwendung finden.

Nachfolgend werden die einzelnen Ausführungsbeispiele der Fittings 20, 120 sowie 40, 140 anhand weiterer Figuren im Detail erläutert.

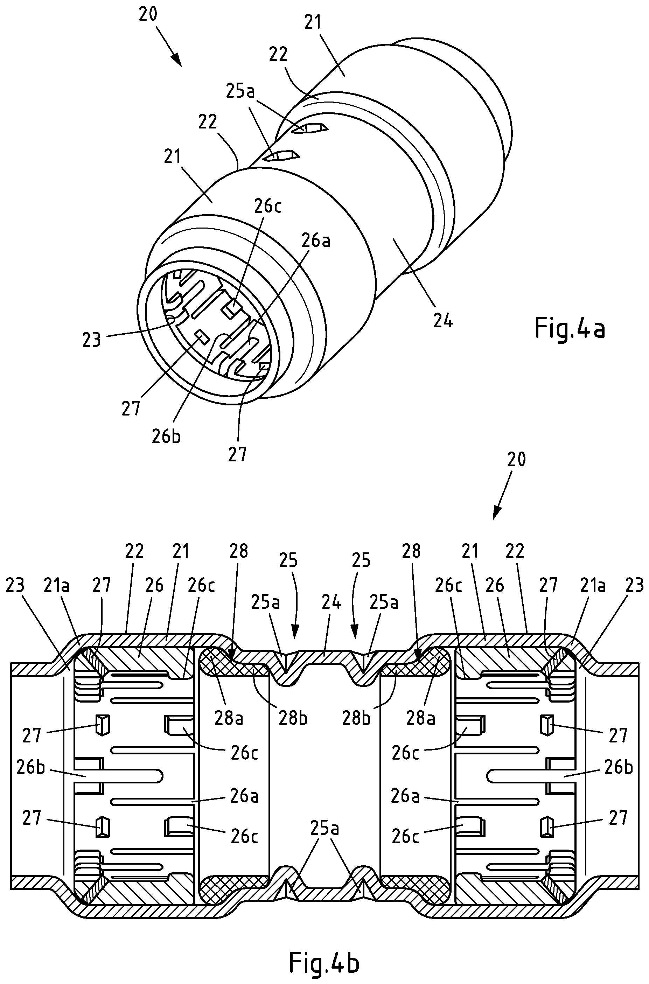

Die Fig. 4a bis 4e zeigen ein erstes Ausführungsbeispiel eines Fittings 20 zum Verbinden mit einem starren Rohr 4 für ein zuvor anhand der Fig. 1a bis 1f erläutertes System 2. Das Fitting weist einen Grundkörper 24 und ein in dem Grundkörper 24 umfangseitig ausgebildetes und nach innen vorstehendes Anschlagelement 25 auf. Weiterhin ist eine mit dem Grundkörper 24 verbundene und eine Außenkontur 22 bildende Presshülse 21 vorgesehen, die eine nach innen zum aufzunehmenden Rohr 4 hin gerichtete Kammer 23 aufweist. In der Kammer 23 ist ein Klemmring 26 bestehend aus einem Kunststoff mit einer Mehrzahl von entgegen der Auszugsrichtung des einzuschiebenden Rohres 4 ausgerichteten Klemmelementen 27 angeordnet. Zudem ist ein in der Kammer 23 angrenzend an das Anschlagelement 25 angeordnetes Dichtelement 28 mit einem runden Abschnitt 28a und einem eine Lippendichtung bildenden flachen Abschnitt 28b angeordnet.

Die Presshülse 21 ist integral mit dem Grundkörper 24 verbunden, so dass der Pressabschnitt in Form der Presshülse 21 und der Grundkörper 24 in vorteilhafter Weise einteilig hergestellt werden kann.

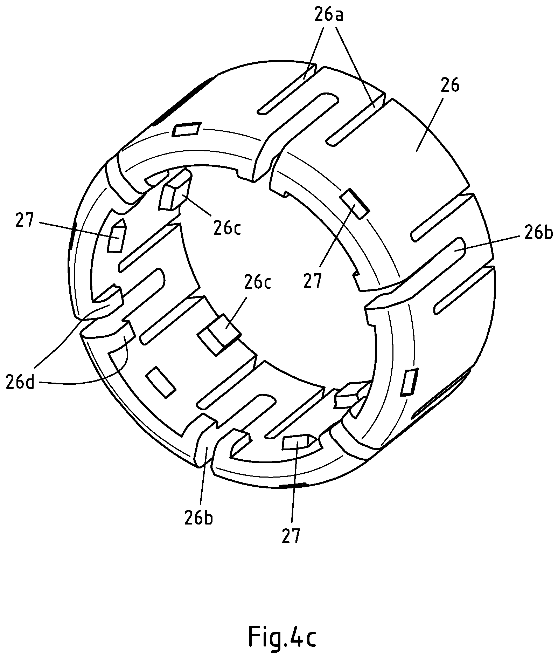

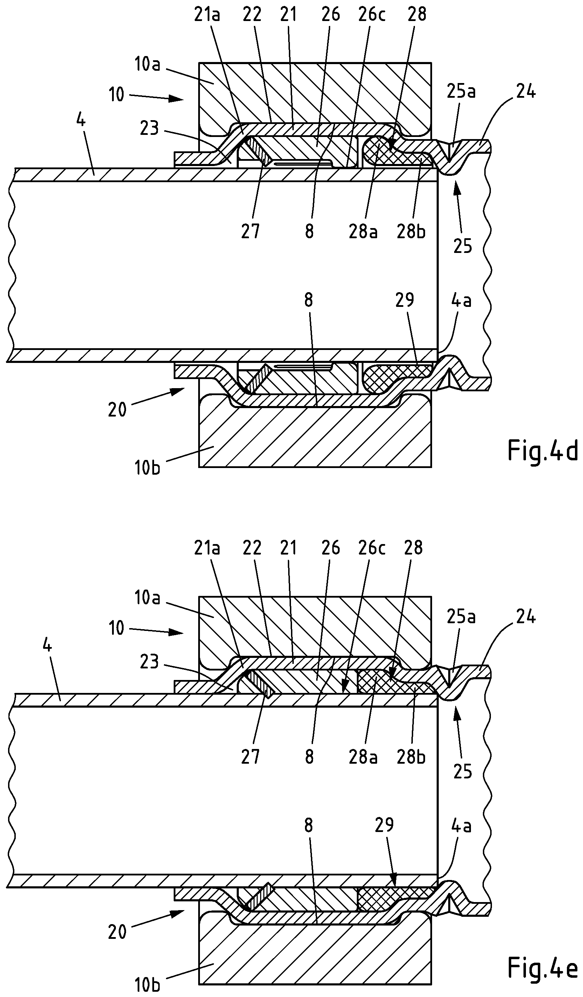

Das Anschlagelement 25 besteht vorliegend aus zwei nach innen gerichteten und sich radial gegenüberliegenden Vertiefungen 25a, die beispielsweise als Körnerpunkte ausgebildet sind. Der Rohranschlag erfolgt somit punktuell und nicht umlaufend, wodurch Toträume vermieden werden, auch wenn ein Rohr 4 eingeschoben ist und die Dichtung 28 im Bereich des Anschlagelementes 25 abdichtet. In Fig. 4 b ist für beide Seiten des Fittings 20 jeweils ein Paar von sich radial gegenüber liegenden Körnerpunkten dargestellt, für jede Fittingseite ein Paar.

Die Sicherung des Rohres 4 gegen einen Auszug und/oder gegen einen zu hohen Innendruck erfolgt über den Klemmring 26, der als Kunststoffklemmring ausgebildet ist und in dem metallische Schneiden als Klemmelemente 27 angeordnet sind. Der Kunststoffklemmring 26 weist weiterhin umlaufende Schlitze 26a und 26b auf, die den Klemmring 26 insgesamt flexibel machen und somit die Montage in dem Fitting 20 innerhalb der Presshülse 21 erleichtern. Zudem kann der Klemmring 26 dadurch als umlaufend geschlossener Ring ausgebildet sein und leichter beim Verpressen im Radius verringert werden.

Die Klemmelemente 27 sind als Schneiden in Form von Drahtelementen ausgeführt, die in dafür vorgesehene Ausnehmungen eingesetzt sind. Die Fixierung der Klemmelemente 27 im Kunststoff des Klemmrings 26 erfolgt somit formschlüssig. Die Klemmelemente 27 können in verschiedener Weise hergestellt sein, beispielsweise als Gussteile oder als Stanzteile. Die Anzahl der Klemmelemente 27 ist vorliegend sechs, kann aber je nach Anforderung bzw. Dimension des Klemmrings 27 festgelegt werden.

Die Klemmelemente 27 sind weiterhin im distalen, den Anschlagelementen 25 gegenüberliegenden Bereich der Kammer 23 angeordnet und nehmen die Auszugskraft auf, indem die Klemmelemente 27 punktuell das Rohr 4 verformen, siehe Fig. 4e, und sich dabei an der Wand in einem distalen äußeren Eckbereich 21a der Presshülse 21 abstützen. Somit ist ein direkter Kraftfluss von dem Rohr 4 über die Presshülse 21 in das Fitting 4 gewährleistet. Der Klemmring 26 hat nach dem Verpressen lediglich eine stützende Funktion und trägt nur geringfügig oder gar nicht zur Auszugssicherung bei.

Des Weiteren weist der Klemmring 26 beabstandet zu den Klemmelementen 27 nach innen gerichtete Stege 26c auf, wobei die Stege 26c einen Innenquerschnitt definieren, der gleich groß oder geringfügig kleiner als der Außendurchmesser des Rohres 4 ist. Die Stege 26c halten das Rohr 4 im unverpressten Zustand des Fittings 20 entsprechend Fig. 4d, so dass das Rohr 4 nicht aus dem Fitting 20 heraus rutschen kann. Darüber hinaus sind ebenfalls nach innen gerichtete Stege 26d ausgebildet, die ein einzuschiebendes Rohr 4 während des Einschiebens führen.

Zudem bilden die Stege 26c eine Führung des Rohres 4 beim Einschieben in den Fitting 20. Ist der Innenquerschnitt der Innenflächen der Stege 26c geringfügig kleiner als der Außendurchmesser des Rohres 4, so wird dem Rohr 4 beim Einschieben ein geringer Widerstand geboten. Somit erhält der Benutzer beim Einschieben des Rohres 4 ein haptisches Feedback dafür, dass das Rohr 4 in das Fitting eingesteckt ist.

Die Dichtung 28 ist als Lippendichtung mit den Abschnitten 28a und 28b ausgebildet und dichtet nach einem Verpressen den Spalt 29 zwischen dem Rohr 4 und der Presshülse 21 bis zum Ende 4a des eingesteckten Rohres 4 ab. Die Dichtung 28 liegt dazu einerseits mit dem runden Abschnitt 28a innerhalb der Kammer 23 an einem schrägen Abschnitt an und wird dadurch positioniert. Der flache Abschnitt 28b ist zwischen der Presshülse 21 und dem einzuschiebenden Rohr 4 angeordnet, was sich insbesondere im verpressten Zustand in Fig. 4e ergibt. Nach dem Verpressen wird somit der Spalt 29 ausgefüllt.

Der Pressvorgang wird durch einen Vergleich der Fig. 4d und 4e deutlich. Die beiden Pressbackenhälften 10a und 10b werden radial nach innen bewegt und durch die Anlage der Presskontur 8 der beiden Pressbackenhälften 10a und 10b wird die Presshülse 21 radial nach innen verformt. Dadurch wird einerseits der Klemmring 26 so verformt, dass die Klemmelemente 27 nach innen in das Material des Rohres 4 eindrücken und somit die Fixierung des Rohres 4 mit dem Fitting 20 erreicht wird. Andererseits wird bei der Verformung der Presshülse 21 auch die Dichtung 28 und insbesondere der Abschnitt 28b als Lippendichtung radial nach innen verformt und die Dichtung 28 dichtet den Spalt 29 ab.

Mit dem Dichtelement 28 wird somit ein hohes Maß an Hygiene sichergestellt und Spaltkorrosion vermieden. Somit werden in Verbindung mit dem punktuellen Rohranschlag 25 Toträume vermieden, in denen sich Medien sammeln können. Die Lippendichtung sorgt weiterhin für die Systemdichtigkeit.

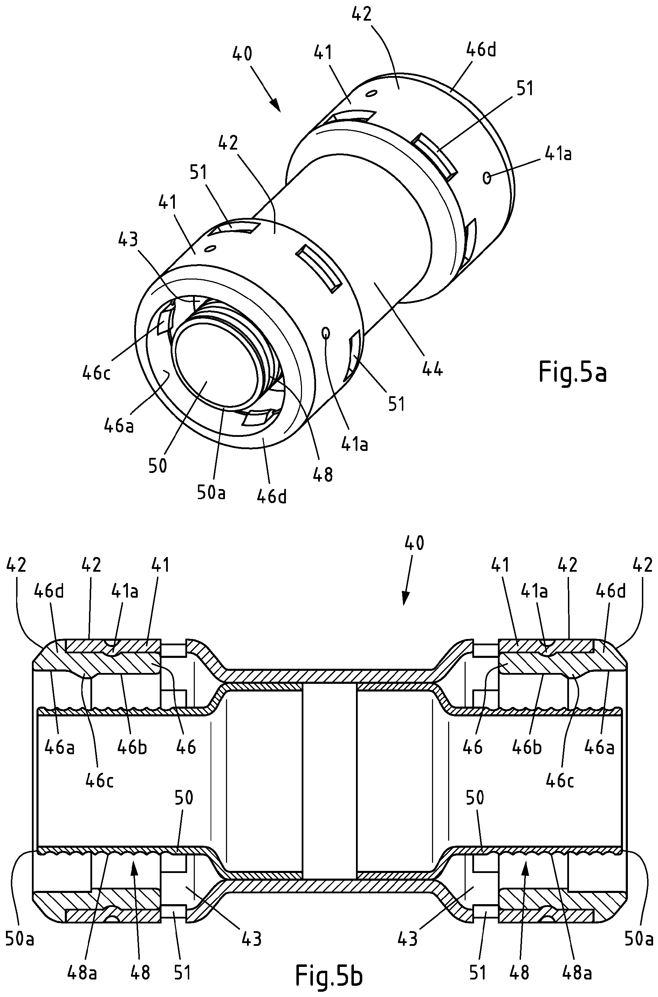

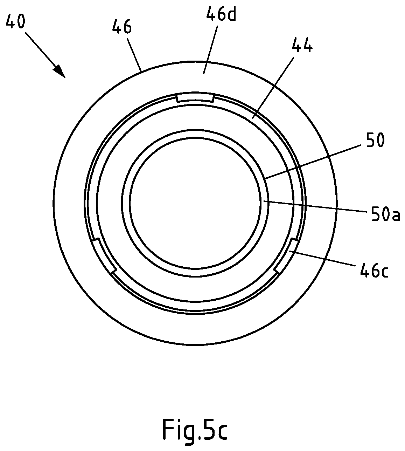

Die Fig. 5a bis 5e zeigen ein Fitting 40 zum Verbinden mit einem flexiblen Rohr 6 für ein System 2 gemäß den Fig.

1a bis 1f. Das Fitting 40 weist einen Grundkörper 44 und eine damit verbundene und eine Außenkontur 42 bildenden Presshülse 41 auf. Die Presshülse 41 bildet eine nach innen zum aufzunehmenden Rohr 6 hin gerichtete Kammer 43, in der ein Kraftübertragungsring 46 angeordnet ist. Weiterhin ist ein mit dem Grundkörper 44 verbundener und mit einer nach außen zum einzuschiebenden Rohr 6 gerichteten Dichtkontur 48 versehener Stützkörper 50 vorgesehen.

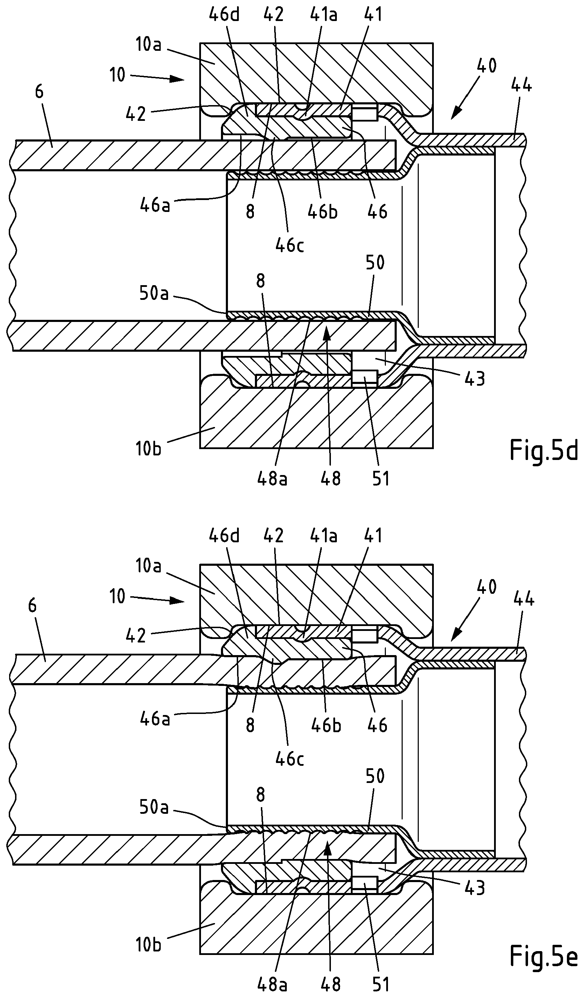

Die Presshülse 41 und der Stützkörper 50 sind beabstandet zueinander angeordnet und definieren einen Zwischenraum zum Einführen und Aufnehmen des Rohres 6, wie sich insbesondere aus Fig. 5d ergibt.

Die Presshülse 41 und der Stützkörper 50 sind stoffschlüssig durch Verschweißen mit dem Grundkörper 44 verbunden. Der Stützkörper 50 ist für die Abdichtung des flexiblen Rohres 6, insbesondere eines Mehrschichtverbundrohres, gegenüber dem Fitting 40 erforderlich. Der Stützkörper 50 ist bevorzugt aus Metall hergestellt und ermöglicht eine deutlich verbesserte Chemikalienbeständigkeit und Robustheit gegenüber Stützkörpern aus einem festen Kunststoff.

Weiterhin weist die Presshülse 41 in der Wandung Vertiefungen 41a in Form von Körnerpunkten für eine innen liegende Verrastung des Kraftübertragungsrings 46 mit der Presshülse 41 auf. Der Kraftübertragungsring 46 ist somit in der Presshülse 41 positioniert und fixiert.

Der Kraftübertragungsring 46 weist zylindrische Abschnitte 46a und 46b sowie einen nach innen vorstehende Rippe 46c zur Anlage an dem einzuschiebenden Rohr 6 auf.

Die Abdichtung des Fittings 40 gegenüber dem Rohr 6 wird bevorzugt ohne zusätzliche Weichdichtung über die Dichtkontur 48 des Stützkörpers 50 und die Kraftübertragung durch den Kraftübertragungsring 46 gewährleistet.

Das Verpressen des Fittings 40 wird durch einen Vergleich zwischen den Fig. 5d und 5e deutlich. Die beiden Pressbackenhälften 10a und 10b werden radial nach innen bewegt und durch die Anlage der Presskontur 8 der beiden Pressbackenhälften 10a und 10b wird die Presshülse 41 radial nach innen verformt. Dadurch wird einerseits der Kraftübertragungsring 46 so verformt, dass die Kraft auf das Material des Rohres 6 übertragen wird. Das Rohr 6 wird dadurch radial nach innen verformt und dadurch auf die Dichtkontur 48 des Stützkörpers 50 abdichtend aufgepresst. Die Abdichtung erfolgt dabei am äußeren dem Rohr 6 zugewandten Ende 50a des Stützkörpers 50, so dass in diesem Bereich keine Toträume entstehen.

Eine Sicherung gegen Auszug des Rohres 6 erfolgt beispielsweise über die Halterippen 48a der Dichtkontur 48.

Weiterhin zeigen die Fig. 5a bis 5e, dass ein Abschnitt 46d des Kraftübertragungsrings 46 axial aus der Presshülse 41 herausragt und einen Abschnitt der zu verpressenden Außenkontur 42 bildet. Mit dieser Ausgestaltung wird ein vom Fitting 20 abweichendes äußeres Erscheinungsbild erreicht, die die Unterscheidung zwischen den Fittings 20 und 40 eines Systems erleichtert.

Die Presshülse 41 weist weiterhin Sichtfenster 51 auf, so dass eine Einschubkontrolle für das Rohr 6 möglich ist. Weist das Rohr 6 eine besondere Farbe auf, so kann diese als Signalfarbe durch das Sichtfenster 51 in der Presshülse 41 gut sichtbar sein.

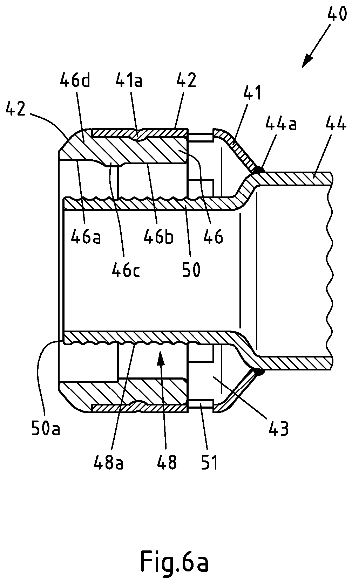

Fig. 6a zeigt eine erste alternative Ausgestaltung des Fittings 40, bei der die Presshülse 41 als separates Teil mit dem Grundkörper 44 stoffschlüssig mit einer Schweißnaht 44a verbunden ist, während der Stützkörper 50 integral mit dem Grundkörper 44 ausgebildet ist.

Aus der Beschreibung der Fittings 20 und 40 ergeben sich für die Presshülsen 21 und 41 weitgehend übereinstimmende Außenkonturen 22 und 42. Somit sind die Fittings 20 und 40 für ein System geeignet, wie es in den Fig. 1a bis 1f gezeigt ist. Die Fittings 20 und 40 lassen sich durch die gleiche Pressbacke 10 verpressen, ohne dass es einer Änderung des Presswerkzeugs bedarf, wenn ein Benutzer zwischen dem Verpressen von Fittings 20 und dem Verpressen von Fittings 40 wechselt.

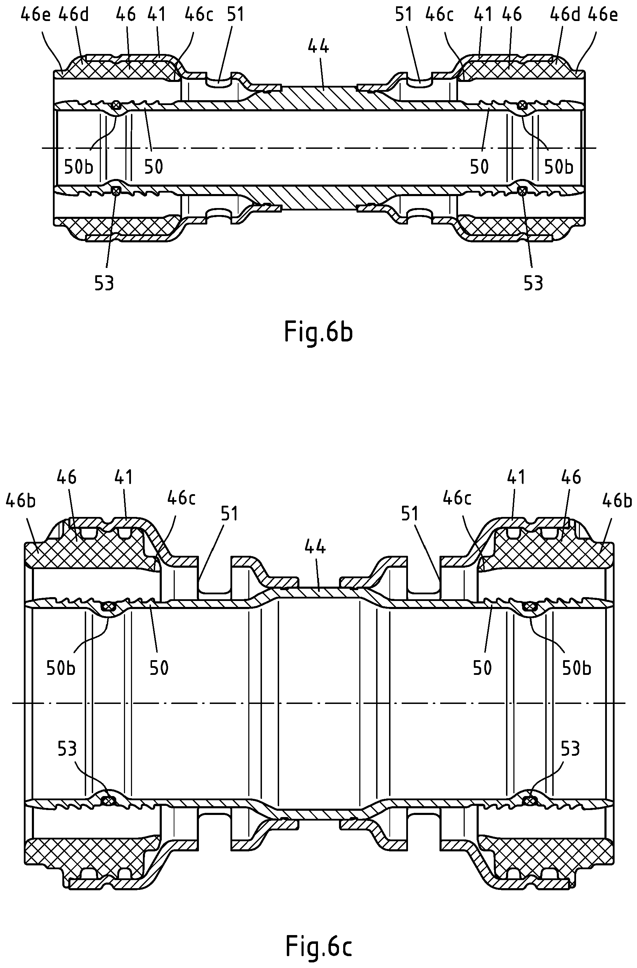

Fig. 6b zeigt eine weitere alternative Ausführungsform eines unverpressten Fittings 40, wobei gleiche Bezugszeichen gleiche oder ähnliche Elemente kennzeichnen, die jeweils gleiche Funktionen aufweisen.

Bei der Ausführungsform nach Fig. 6b ist eine axiale Verlängerung 46e des Abschnitts 46d des Kraftübertragungsrings 46 vorgesehen, die das Ansetzen eines Presswerkzeugs erleichtert und somit verbessert. Des Weiteren ist die Rippe 46c axial nach innen versetzt ausgebildet, wodurch bei einem Einführen eines Rohres die zu überwindende Reibung und das damit verbundene haptische Signal beim Verbinden an einer axialen Position näher an der maximalen Einstecktiefe auftritt.

Des Weiteren weist der Fitting 40 nach Fig. 6b einen Stützkörper 50 auf, an dessen Außenseite eine umlaufende und sich nach radial nach innen erstreckende Vertiefung in Form eines Wulstes 50b ausgebildet ist. In dem Wulst 50b ist eine Dichtung in Form eines O-Rings 53 angeordnet, der beim Aufschieben eines Rohres mit dessen Innenseite anliegt und beim Verpressen eine zusätzliche Dichtwirkung erzeugt. Diese Ausgestaltung ist strömungsgünstiger als ein durchgehender geringer Innendurchmesser.

Eine weitere Änderung des Fittings 40 gegenüber der Ausgestaltung nach Fig. 6a besteht darin, dass das Sichtfenster 51 axial in Richtung des Grundkörpers 44 versetzt angeordnet ist und nicht mehr im Bereich der Presskontur 8 angeordnet ist. Ein Vorteil dieser Ausgestaltung besteht darin, dass die Sichtfenster auch während des Pressvorgangs zu sehen sind und nicht durch das Pressprofil verdeckt werden.

Fig. 6c zeigt eine weitere Ausführungsform, die im Wesentlichen der Ausführungsform nach Fig. 6b gleicht, wobei andere Dimensionierungen gewählt worden sind.

Ein Unterschied zu Fig. 6a und 6c ist in Fig. 6b der Grundkörper 44 als massives Drehteil ausgebildet, während in den Fig. 6a und 6c der Grundkörper 46 als Umformteil ausgebildet ist.

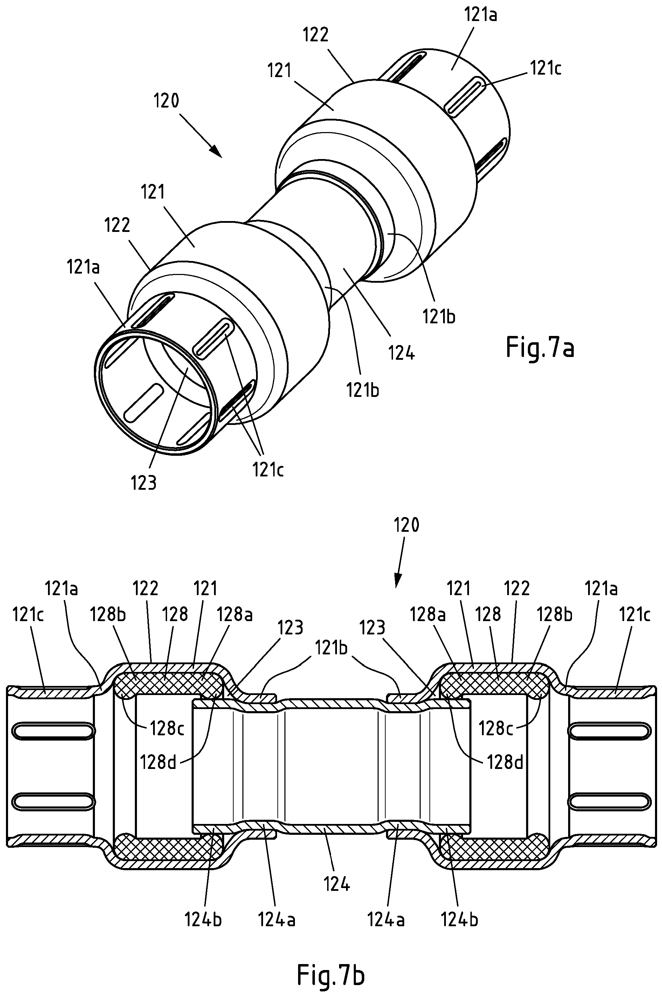

Fig. 7a bis 7d zeigen ein Fitting 120 zum Verbinden mit einem starren Rohr 4 für ein System gemäß der Fig. 2a bis 2f. Das Fitting 120 weist einem Grundkörper 124 und eine damit verbundene und eine Außenkontur 122 bildende Presshülse 121 auf, wobei die Presshülse 121 eine nach innen zum aufzunehmenden Rohr 4 hin gerichtete Kammer 123 aufweist. Am distalen Ende der Presshülse 121 ist ein Hülsenabschnitt 121a ausgebildet, der über die Kammer 123 hinausgeht. Der Hülsenabschnitt 121a bildet dabei einen Abschnitt der umzuformenden Außenkontur 122. Weiterhin ist in der Kammer 123 ein Dichtelement 128 angeordnet.

Die Presshülse 121 ist formschlüssig mit einem Abschnitt 121b auf den Grundkörper 124 aufgeformt, wodurch eine Verjüngung des Durchmessers des Grundkörpers 124 in einem Abschnitt 124a entsteht. Die Presshülse 121 ist daher fest mit dem Grundkörper 124 verbunden.

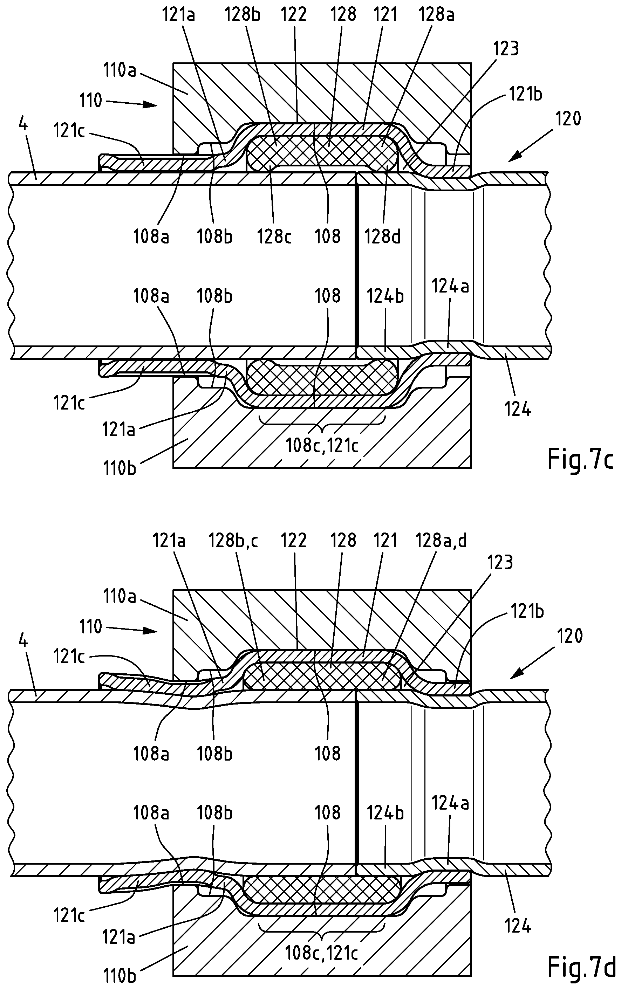

Weiterhin erstreckt sich ein Innenabschnitt 124b des Grundkörpers 124 in Richtung des einzuschiebenden Rohres 4 radial innerhalb der Kammer 123. Ein Abschnitt 128a des Dichtelements 128 ist dabei zwischen der Presshülse 121 und dem Innenabschnitt 124b des Grundkörpers 124 angeordnet und ein weiterer Abschnitt 128b des Dichtelements 128 ist zwischen der Presshülse 121 und dem einzuschiebenden Rohr 4 angeordnet, wie sich insbesondere aus den Fig. 7c und 7d ergibt.

Das Dichtelement 128 füllt einen wesentlichen Teil der Kammer 123 aus und dichtet somit sowohl auf der Seite des Grundkörpers 124 als auch auf dem starren Rohr 4 ab, das stirnseitig bis an den Grundkörper 4 eingeschoben wird. Hierdurch wird die Trennung in den medienberührten Bereich des Grundkörpers 124 und in den nicht medienberührten Bereich der Presshülse 121 ermöglicht. Das lange Dichtelement 128 erlaubt weiterhin eine hohe Toleranz der korrekten Einstecktiefe des Rohres 4 und sorgt insgesamt für eine nahezu spaltfreie Verbindung zwischen dem Fitting 102 und dem Rohr 4.

Weiterhin weisen der Hülsenabschnitt 121a und das Dichtelement 128 nach innen ragende Nocken 121c sowie über den Umfang verteilt angeordnete Nocken 128c zur Führung und Halterung des Rohres 4 auf. Dadurch werden eine Halterung des Rohres 4, ein haptisches Feedback beim Überwinden der Nocken 121c sowie der Nocken 128c während des Einschiebens des Rohres zur Kontrolle der Einstecktiefe und auch eine Führung des Rohres beim Einschieben erreicht. Ebenfalls umlaufend angeordnete Nocken 128d des Dichtelements 128 liegen dagegen bereits im unverpressten Zustand an der Außenseite des Innenabschnitts 124b an.

Die im vorderen Abschnitt der Presshülse 121 werkseitig eingeprägten Nocken 121c dienen auch einer lokalen Verformung des starren Rohres 4 beim Verpressen. Daher ist bei diesem Aufbau kein Klemmring mit Haltefunktion notwendig. Darüber hinaus wird nach dem Verpressen mit den Nocken 121c eine Verdrehfestigkeit sichergestellt.

Der Pressvorgang wird durch einen Vergleich zwischen den Fig. 7c und 7d verdeutlicht. Die beiden Pressbackenhälften 110a und 110b werden radial nach innen bewegt und durch die Anlage der Presskontur 108 der beiden Pressbackenhälften 110a und 110b wird die Presshülse 121 radial nach innen verformt. Die Abschnitte 108a und 108c der Presskontur 108 liegen an den Abschnitten 121a und 121c der Presshülse 121 an und verformen die Presshülse 121 in diesen beiden Abschnitten radial nach innen. Dadurch wird einerseits der Abschnitt 121a auf das Rohr 4 aufgeformt, wobei der Abschnitt 121a dabei umfangseitig ganz oder nur abschnittsweise ausgebildet sein kann. Andererseits führt das Verformen des Abschnitts 121c zu einem Verformen des Dichtelements 128, so dass das Rohr 4 gegenüber der Presshülse 121 abgedichtet ist. Dabei werden der Abschnitt 128a und die Nocken 128d des Dichtelements 128 an die Außenseite des Innenabschnitts 124a des Grundkörpers 124 angepresst. Ebenso werden der Abschnitt 128b und der Ring 128c an die Außenseite des Rohres 4 angepresst. Dadurch werden sowohl der Grundkörper 124 des Fittings 120 als auch das Rohr 4 gegenüber der außerhalb liegenden Presshülse 121 abgedichtet.

Wie sich aus den Fig. 7c und 7d weiter ergibt, stößt das eingeschobene Rohr 4 stirnseitig an den Abschnitt 124b des Grundkörpers 124 an. Dadurch wird eine Querschnittsänderung beim Übergang zwischen dem Rohr 4 und dem Fitting 120 vermieden.

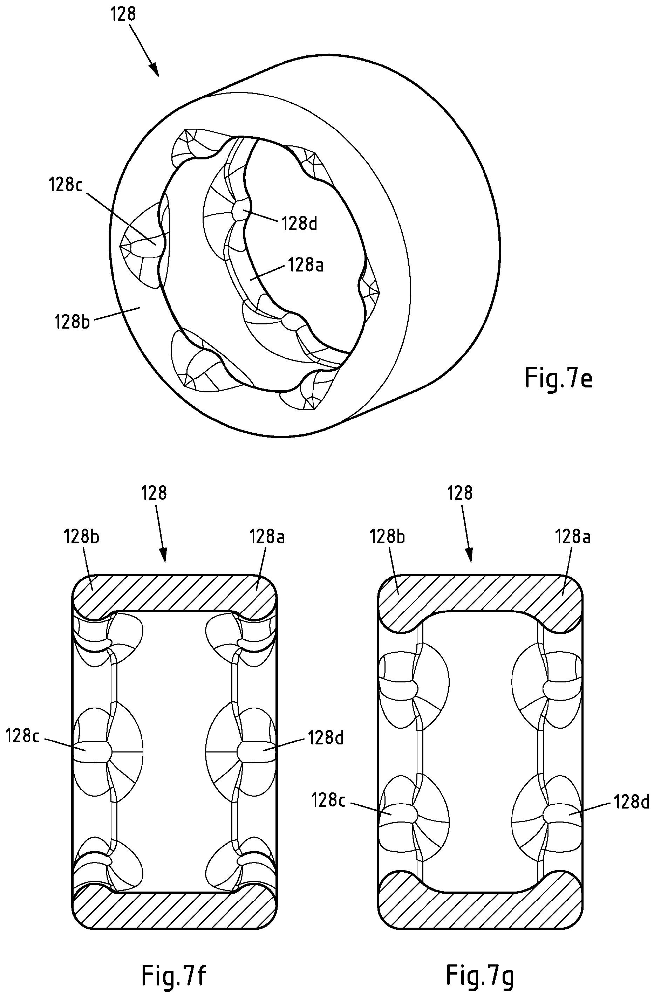

Fig. 7e zeigt das ringförmige Dichtelement in einer perspektivischen Darstellung, während die Fig. 7f und 7g das Dichtelement 128 in zwei an unterschiedlichen Azimutwinkeln geschnittenen Ansichten zeigen. Die umlaufenden und nach innen gerichteten wulstartigen Abschnitte 128a und 128b weisen zusätzlich nach innen gerichtete Nocken 128c und 128d auf, die die oben beschriebenen Funktionen haben.

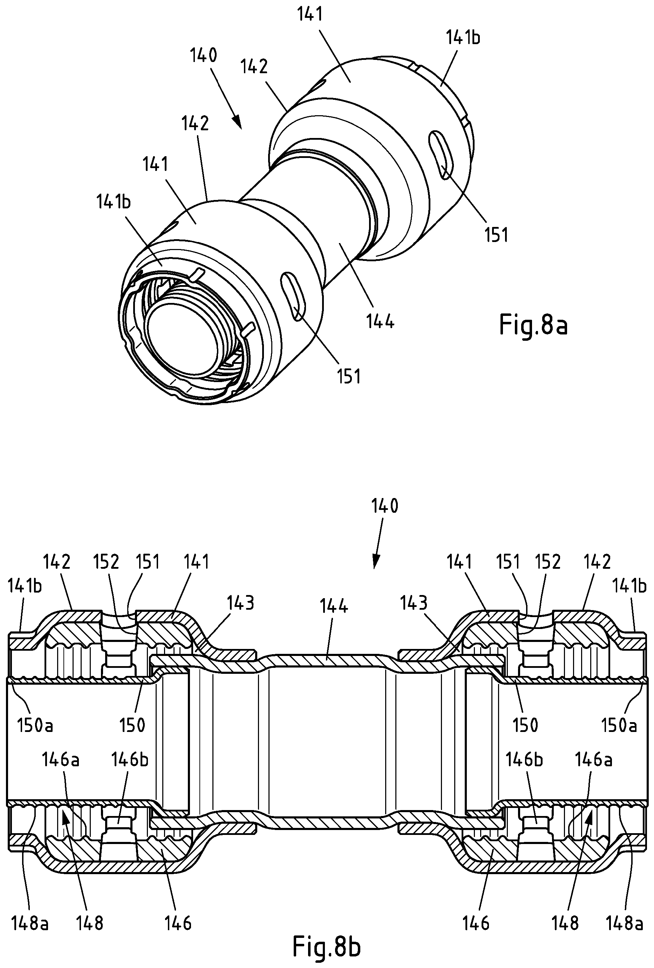

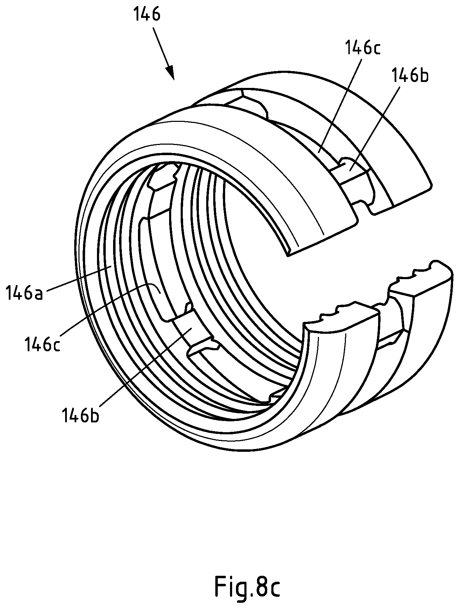

Die Fig. 8a bis 8d zeigen ein Fitting 140 zum Verbinden mit einem flexiblen Rohr 6 für ein System 102 nach den Fig. 2a bis 2f. Das Fitting 140 weist einen Grundkörper 144 auf, mit dem eine eine Außenkontur 142 bildenden Presshülse 141 stoffschlüssig verbunden ist. Die Presshülse 141 weist weiterhin eine nach innen zum aufzunehmenden Rohr 6 hin gerichtete Kammer 143 auf, in der ein Kraftübertragungsring 146 angeordnet ist. Mit dem Grundkörper 144 ist ein Stützkörper 150 ebenfalls stoffschlüssig verbunden, der eine nach außen zum einzuschiebenden Rohr 6 gerichtete Dichtkontur 148 aufweist. Alternativ kann der Stützkörper 150 auch einstückig mit dem Grundkörper 144 ausgebildet sein. Das Fitting 140 weist somit an jeder der zu verpressenden Seiten einen dreiteiligen Aufbau aus Grundkörper 144 und damit verbundener Presshülse 141 und Stützkörper 150 auf.

Die Presshülse 141 und der Stützkörper 150 sind beabstandet zueinander angeordnet und definieren einen ringförmigen Raum zum Einführen und Aufnahme des Rohres 6.

Der Stützkörper 150 ist zur Abdichtung des flexiblen Rohres 6, insbesondere eines Mehrschichtverbundrohres, gegenüber dem Fitting 140 erforderlich. Der Stützkörper 150 ist bevorzugt aus Metall hergestellt und ermöglicht eine deutlich verbesserte Chemikalienbeständigkeit und Robustheit gegenüber Stützkörpern aus einem festen Kunststoff wie beispielsweise Polyphenylensulfon (PPSU).

Der Kraftübertragungsring 146 weist einen gezahnten Abschnitt 146a zur Anlage an dem einzuschiebenden Rohr 6 auf. Dadurch wird eine Führung und ein Halten des Rohres 6 ermöglicht, um vor dem Verpressen eine abgesicherte Position des Rohres 4 relativ zum Fitting 140 zu ermöglichen. In umlaufende Richtung zwischen den gezahnten Abschnitten 146a sind Ausnehmungen 146c für eine verbesserte Flexibilität des Kraftübertragungsrings 146 vorgesehen. Zudem ist der Kraftübertragungsring 146 als C-Ring ausgebildet, um das Einsetzen in die Presshülse 141 zu erleichtern.

Die Abdichtung des Fittings 140 gegenüber dem Rohr 6 wird ohne eine zusätzliche Weichdichtung über die Dichtkontur 148 und die Kraftübertragung durch den Kraftübertragungsring 146 gewährleistet. Durch das Umformen der Presshülse 141 beim Verpressen wird das flexible Rohr 6 auf die Dichtkontur 148 aufgepresst, wodurch eine abdichtende Wirkung erreicht wird.

Die Abdichtung erfolgt bei dem dargestellten Ausführungsbeispiel am äußeren dem Rohr 6 zugewandten Ende 150a des Stützkörpers 150, so dass hier nach dem Verpressen keine Toträume entstehen.

Eine Sicherung gegen Auszug des Rohres 6 erfolgt ebenfalls über die Halterippen 148a der Dichtkontur 148.

Weiterhin weist die Presshülse 141 einen über die Kammer 143 hinausgehenden Hülsenabschnitt 141b auf, der einen Abschnitt der durch eine Pressbacke 110 umzuformenden Außenkontur 142 der Presshülse 141 bildet. Dazu weist die Pressbacke 110 einen entsprechenden Abschnitt 108b der Presskontur 108 auf.

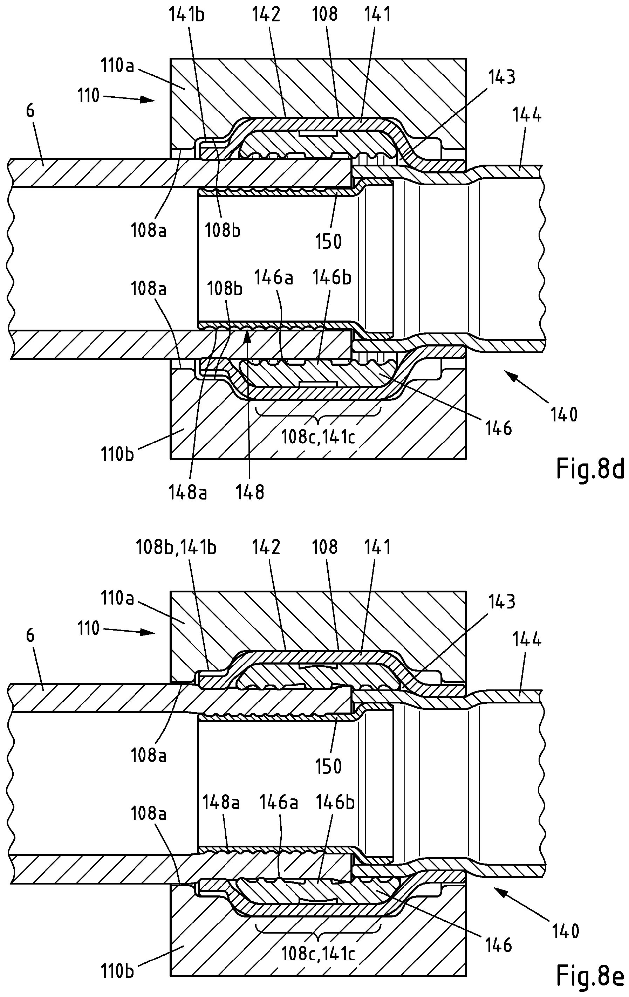

Der Pressvorgang ergibt sich durch einen Vergleich der Fig. 8d und 8e. Die beiden Pressbackenhälften 110a und 110b werden radial nach innen bewegt und durch die Anlage der Presskontur 108 der beiden Pressbackenhälften 110a und 110b wird die Presshülse 121 radial nach innen verformt. Die Abschnitte 108b und 108c der Presskontur 108 liegen an den Abschnitten 141b und 141c der Presshülse 141 an und verformen die Presshülse 141 in diesen beiden Abschnitten radial nach innen. Dadurch wird einerseits der Abschnitt 141b auf das Rohr 4 aufgeformt, wobei der Abschnitt 141b dabei umfangseitig ganz oder nur abschnittsweise ausgebildet sein kann. Andererseits führt das Verformen des Abschnitts 141c zu einem Aufformen des Rohres 6 auf die Dichtkontur 148 des Stützkörpers 150.

Der Kraftübertragungsring 146 weist darüber hinaus nach innen ragende Stege 146b auf, die einen Innenquerschnitt definieren, der gleich groß wie oder geringfügig kleiner als der Außendurchmesser des Rohres 6 ist. Dadurch bilden die umfangseitig verteilt angeordneten Stege 146b eine Führung und Halterung für das Rohr 6.

Des Weiteren weisen die Presshülse 141 und der Kraftübertragungsring 146 zueinander korrespondierende Sichtfenster 151 und 152 auf. Somit kann bei der Installation des Rohres 6 im Fitting 140 die Einstecktiefe des Rohres 6 überprüft werden, da die Abdichtung des Rohres 6 innenseitig über den Stützkörper 150 erfolgt.

Die in Fig. 8b dargestellten Sichtfenster 151 und 152 sind in den Fig. 8d und 8e nicht zu erkennen, da ein anderer Schnitt durch den Fitting gewählt wurde, um die nach innen ragenden Stege 146b zu zeigen.

Die Fig. 7a bis 7d und 8a bis 8d zeigen darüber hinaus auch ein System zum Verbinden von starren Rohren 4 und zum Verbinden von flexiblen Rohren 6. Zum einen weist das System eine Mehrzahl von Fittings 120 zum Verbinden mit einem starren Rohr 4 gemäß der Fig. 7a bis 7d und zum anderen eine Mehrzahl von Fittings 140 zum Verbinden mit einem flexiblen Rohr 6 gemäß der Fig. 8a bis 8d auf. Der Grundkörper 124 des Fittings 120 und der Grundkörper 144 des Fittings 140 zum Verbinden mit einem starren Rohr 6 sind dabei gleich ausgebildet.

Mit den Grundkörpern 124 bzw. 144 ist jeweils die Presshülse 121 bzw. 141 verbunden. Für flexible Rohre 6 kommt noch der Stützkörper 150 hinzu. Der Grundkörper 124 bzw. 144 weist zudem nur geringe Umformgerade auf und kann somit auch aus schwer umformbaren Materialien wie Duplexstahl oder einer der oben genannten ferritischen Stähle, gefertigt werden. Der gleiche Grundkörper 124 bzw. 144 kann sowohl in dem Fitting 120 für starre Rohre 4 als auch in dem Fitting 140 flexible Rohre 6 eingesetzt werden und ermöglicht somit einen modularen Aufbau der Fittings des beschriebenen Systems.

Das System zum Verbinden von starren Rohren 4 und zum Verbinden von flexiblen Rohren 6 gemäß der Fig. 7a bis 7d und 8a bis 8d ist auch für ein erfindungsgemäßes System 102 gemäß den Fig. 2a bis 2f geeignet.

Die Presshülsen 121 bzw. 141 unterscheiden sich jedoch in der jeweiligen Anwendung für starre Rohre 4 und für flexible Rohre 6 und werden beispielsweise kraftschlüssig durch werkseitiges Verpressen auf den Grundkörper 124 bzw. 144 montiert. Ein weiterer Vorteil des zweiteiligen Aufbaus aus Grundkörper 124 bzw. 144 und Presshülse 121 bzw. 141 liegt darin, dass der Fitting 120 bzw. 140 in einen medienberührten Grundkörper 124 bzw. 144 und eine nicht medienberührte Presshülse 121 bzw. 141 aufgeteilt wird. Somit ist es beispielsweise möglich, den Grundkörper 124 bzw. 144 und ggf. den Stützkörper 150 aus einem sehr hochwertigen, korrosionsbeständigen Material zu fertigen, für die Presshülse 121 bzw. 141 hingegen ein kostengünstiges Material einzusetzen. Grundsätzlich kann hier die Materialauswahl spezifisch im Hinblick auf die jeweilige Anforderung, also an das mit dem starren Rohr 4 und/oder mit dem flexiblen Rohr 6 zu führende Medium erfolgen.

Aus der Beschreibung der Fittings 120 und 140 ergeben sich für die Presshülsen 121 und 141 weitgehend übereinstimmende Außenkonturen 122 und 142. Somit sind die Fittings 120 und 140 für ein System geeignet, wie es in den Fig. 2a bis 2f gezeigt ist. Die Fittings 120 und 140 lassen sich durch die gleiche Pressbacke 110 verpressen, ohne dass es einer Änderung des Presswerkzeugs bedarf, wenn ein Benutzer zwischen dem Verpressen von Fittings 120 und dem Verpressen von Fittings 140 wechselt.

**Patentansprüche**

1.  Fitting (40) zum Verbinden mit einem flexiblen Rohr (6), insbesondere für ein System nach Anspruch 10,

    - mit einem Grundkörper (44),
    - mit einer mit dem Grundkörper (44) verbundenen und eine Außenkontur (42) bildenden Presshülse (41), wobei die Presshülse (41) eine nach innen zum aufzunehmenden Rohr (4) hin gerichtete Kammer (43) aufweist,
    - mit einem in der Kammer (43) angeordneten Kraftübertragungsring (46) und
    - mit einem mit dem Grundkörper (44) verbundenen und mit einer nach außen zum einzuschiebenden Rohr (4) gerichteten Dichtkontur (48) versehenen Stützkörper (50),
    - wobei ein Abschnitt (46d) des Kraftübertragungsrings (46) axial aus der Presshülse (41) herausragt und einen Abschnitt der zu verpressenden Außenkontur (42) bildet,
    - wobei die Presshülse (41) zusammen mit dem Kraftübertragungsring (46) und dem Stützkörper (50) das zu verbindende flexible Rohr (6) von innen abdichtet.

2.  Fitting nach Anspruch 1,
    **dadurch gekennzeichnet, dass** der Kraftübertragungsring (46) in der Presshülse (41) montiert ist.

3.  Fitting nach Anspruch 1 oder 2,
    **dadurch gekennzeichnet, dass** die Presshülse (41) einschließlich des Kraftübertragungsrings (46) und der Stützkörper (50) beabstandet zueinander angeordnet sind und einen ringförmigen Raum zum Einführen und Aufnehmen des flexiblen Rohres (6) definieren.

4.  Fitting nach einem der Ansprüche 1 bis 3,
    **dadurch gekennzeichnet, dass** die Abdichtung des Fittings (40) gegenüber dem Rohr (6) ohne zusätzliche Weichdichtung über die Dichtkontur (48) und die Kraftübertragung durch den Kraftübertragungsring (46) gewährleistet wird.

5.  Fitting nach einem der Ansprüche 1 bis 3,
    **dadurch gekennzeichnet, dass** eine zusätzliche Weichdichtung vorgesehen ist, vorzugsweise ein O-Ring oder eine Flachdichtung.

6.  Fitting nach einem der Ansprüche 1 bis 5,
    **dadurch gekennzeichnet, dass** der Kraftübertragungsring (46) als Kunststoffring ausgebildet ist.

7.  Fitting nach einem der Ansprüche 1 bis 6,
    **dadurch gekennzeichnet, dass** die Presshülse (41) kraftschlüssig mit dem Grundkörper (44) verbunden ist.

8.  Fitting nach einem der Ansprüche 1 bis 7,
    **dadurch gekennzeichnet, dass** der Kraftübertragungsring (46) nach innen ragende Nocken zur Führung und Halterung des Rohres (6) aufweist.

9.  Fitting nach einem der Ansprüche 1 bis 8,
    **dadurch gekennzeichnet, dass** der Kraftübertragungsring (46) einen zylindrischen Abschnitt (46a, 46b) und/oder einen gezahnten Abschnitt zur Anlage an dem einzuschiebenen Rohr (6) aufweist.

10. System (2; 102) zum Verbinden von starren Rohren (4) und zum Verbinden von flexiblen Rohren (6), wobei die Rohre (4, 6) zueinander korrespondierende Außendurchmesser aufweisen,

    - mit einer eine Presskontur (8; 108) aufweisenden Pressbacke (10; 110),
    - mit mindestens einem ersten Fitting (20; 120) zum Pressverbinden mit einem starren Rohr (4),

-- wobei das mindestens eine erste Fitting (20; 120) als ein außen abdichtendes Fitting ausgebildet ist und ein zu verbindendes starres Rohr (4) von außen abdichtet und

-- wobei das mindestens eine erste Fitting (20; 120) eine erste Presshülse (21; 121) mit einer ersten Außenkontur (22; 122) aufweist,

- mit mindestens einem zweiten Fitting (40; 140) zum Pressverbinden mit einem flexiblen Rohr (6),

-- wobei das mindestens eine zweite Fitting (40; 140) als ein innen abdichtendes Fitting ausgebildet ist und ein zu verbindendes flexibles Rohr (6) von innen abdichtet und

-- wobei das mindestens eine zweite Fitting (40; 140) eine zweite Presshülse (41; 141) mit einer zweiten Außenkontur (42; 142) aufweist,

- wobei die Außenkontur (22; 122) der ersten Presshülse (21; 121) und die Außenkontur (42; 142) der zweiten Presshülse (41; 141) jeweils zumindest abschnittsweise an die Presskontur (8; 108) der Pressbacke (10; 110) angepasst sind und durch die Pressbacke (10; 110) verpressbar sind,

- wobei der zweite Fitting (40) insbesondere gemäß einem der Ansprüche 1 bis 9 ausgebildet ist.

Fig.1a

Fig.1b

Fig.1c

Fig.1d

Fig.1e

Fig.1f

Fig.2a

Fig.2b

Fig.2c

Fig.2d

Fig.2e

Fig.2f

Fig.3a

Fig.3b

Fig.3c

Fig.3d

Fig.3e

Fig.3f

Fig.3g

Fig.3h

Fig.3i

Fig.3j

Fig.3k

Fig.3l

Fig.3m

Fig.3n

Fig.3o

Fig.3p

Fig.3q

Fig.3r

Fig.4a

Fig.4b

Fig.4c

Fig.4d

Fig.4e

Fig.5a

Fig.5b

Fig.5c

Fig.5d

Fig.5e

Fig.6a

Fig.6b

Fig.6c

Fig.7a

Fig.7b

Fig.7c

Fig.7d

Fig.7e

Fig.7f

Fig.7g

Fig.8a

Fig.8b

146

146c

146b

146a

146c

146b

Fig.8c

Fig.8d

Fig.8e